(19)

Europäisches
Patentamt
European
Patent Office
Office européen
des brevets

(11) **EP 1 850 554 A2**

(12) **EUROPEAN PATENT APPLICATION**

(43) Date of publication:
**31.10.2007 Bulletin 2007/44**

(51) Int Cl.:
***H04L 29/06*** *(2006.01)*

(21) Application number: **07008251.6**

(22) Date of filing: **23.04.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **21.04.2006 EP 06008336**

(71) Applicant: **LONMARK Deutschland e.V.
52062 Aachen (DE)**

(72) Inventors:
• **Hertel, Jürgen
  85630 Grasbrunn (DE)**

• **Kwasnowski, Pawel
  30-218 Krakow (PL)**
• **Loy, Dietmar
  1170 Wien (AT)**
• **Mentzel, Martin
  42477 Radevormwald (DE)**
• **Palenski, Peter
  1020 Wien (AT)**
• **Wratil, Peter
  21224 Rosengarten (DE)**

(74) Representative: **Samson & Partner
Patentanwälte
Widenmayerstraße 5
80538 München (DE)**

(54) **Safe communications in a network**

(57)    The present invention relates in general to network communications between devices and, particularly, to safe and non-safe communications between devices in a common network structure.

**Fig. 62**

## Description

### FIELD OF THE INVENTION

The present invention relates in general to network communications between devices and, particularly, to safe and non-safe communications between devices in a common network structure.

### BACKGROUND OF THE INVENTION

In networks safety aspects gain more and more importance. This particularly applies to control networks for, e.g., buildings and/or processes.

Usually, separated networks for, on the one hand, safe communications and, on the other hand, non-safe/conventional communications are used. Communications between a device of the safe network and a device of the non-safe network is not possible due to the physical separation of the networks, different hardware and/or software interfaces, different software protocols and further incompatibilities. The use of separated networks also increases costs, maintenance efforts and limits flexibility.

More recent approaches use a single network in which safe and non-safe communications may occur. Such networks mostly use one or more master devices, which control communications. Further, applications are often limited to a specified, single physical medium, e.g. TCP/IP or RS485. In the case different media may be used, usually specific, predefined interfaces between different media (e.g. router, repeater) are required. Moreover, the number and/or configurations of devices for safe communications and devices for non-safe communications with respect to each other are regularly restricted.

### OBJECT OF THE PRESENT INVENTION

It is the object of the present invention to provide solutions to overcome drawbacks, limitations and problems of known networks for safe and non-safe communications, particularly those mentioned above.

### SHORT DESCRIPTION OF THE INVENTION

To solve the above object the present invention generally provides solutions for a network, preferably a control network, in which both safe and non-safe communications may be performed simultaneously.

Particularly, the present invention provides subject-matters as set forth in the independent claims. Preferred embodiments thereof are defined in the dependent claims.

In the following, the present invention is also referred to as SAFETYLON. Devices, means, data, methods and anything further, which is in accordance with the present invention, may be also indicated by a preceding "SAFETYLON", e.g. a decision according to the present invention may be also referred to as SAFETYLON device.

### SHORT DESCRIPTION OF THE DRAWINGS

The following description of preferred embodiments refers to the accompanying drawings, which illustrate

Fig. 1 a preferred embodiment of a network architecture according to the present invention;

Fig. 2 a preferred embodiment of a protocol according to the present invention;

Fig. 3 a preferred embodiment of a hardware architecture according to the present invention;

Fig. 4 a preferred embodiment of a hardware architecture of a prefabricated CPU module according to the present invention;

Fig. 5 a preferred embodiment of a hardware architecture of a semi-finished circuits board according to the present invention;

Fig. 6 a preferred embodiment of a software architecture according to the present invention;

Figs. 7 and 8 preferred software tools for setting-up and/or putting into operation of an application according to the present invention;

Fig. 9 a safe prior art network and an exemplary safe network according to the present invention;

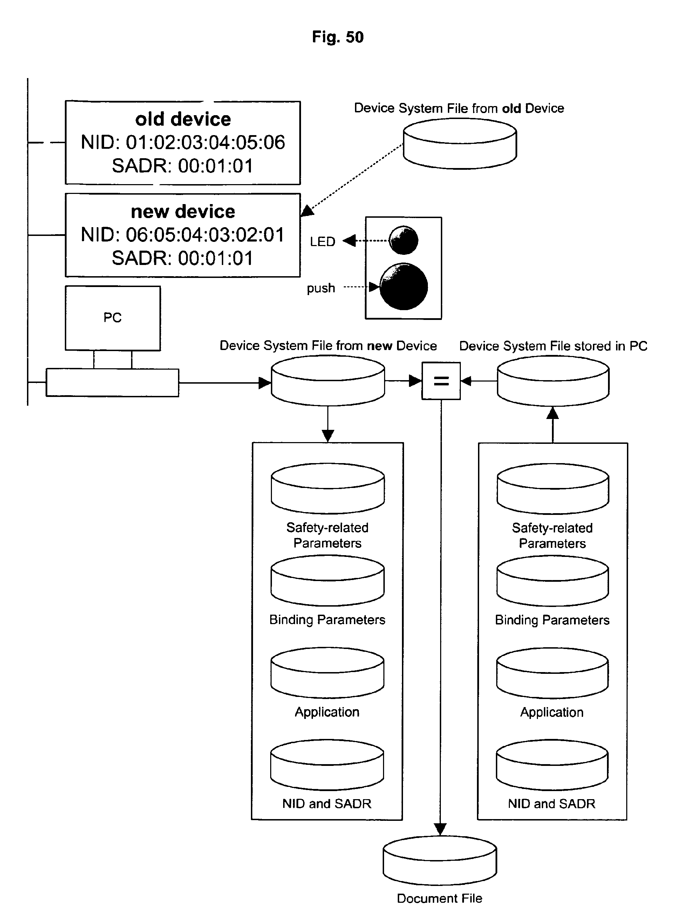

Figs. 10 to 71 several embodiments and aspects of the present invention; and

Figs. 72 to 74 embodiments of the present invention in form of exemplary applications.

## DESCRIPTION OF PREFERRED EMBODIMENTS

The present invention allows to use any kind of medium for communications between network devices, such as FTT, PowerLine, TCP/IP, RS485 and the like.

The present invention also allows to use at least two different media in a common network for communications between network devices, such as combinations of at least two of FTT, PowerLine, TCP/IP, RS485 and the like.

Communications according to the present invention may be carried via conventional routers, repeaters and any other devices arranged between network parts and/or serving as interfaces between network parts.

Devices using safe communications and devices using non-safe communications may be combined without limitation in a common network. Particularly, the present invention enables to use - in a common network - LONMARK® devices and devices according to the present invention (SAFETYLON devices).

A network according to the present invention does not require central or master devices for communications control, e.g. in form of a master-slave arrangement. The present invention allows master-master-communications and/or multi-master-communications.

Further, the present invention allows multicast communications in order to, for example, provide for a group-wise addressing of network components.

In the case an inventive network component or device, such as a sensor, detects a failure (possibly) representing and/or leading to an non-safe state, such as fire, smoke, flooding, the failure or respective information and/or data is safely communicated in the network. In cases where an inventive network comprises acting components, such as an actuator, motors, actively moving units etc., it is possible to activate a so-called safe state or scenario. In such a state or scenario, the at least one acting component receives - via safe communications - information and/or data indicating a failure and, in response thereto, is activated such that undesired results and/or effects of the failure are avoided. For example, in the case fire is detected elevators may be stopped, fire-resistant doors may closed and the like. Such communications between network components and/or devices may be event related or event driven.

It is also possible to carry out such event related or event driven safe communications in order to activate a safe cascading state and/or scenario. A safe cascading state and/or scenario is a case wherein - in response to at least one safe communications indicating a (possibly) non-safe condition or a condition leading to a (possibly) non-safe condition - counter-measures are initiated in cascading sequence. For example, in the case of fire, elevators may be first moved to a position to let people leave and may be then disabled that no elevator operation is possible. Also fire protection doors may be closed in a manner such that people may first leave a specific building part before that building part is closed.

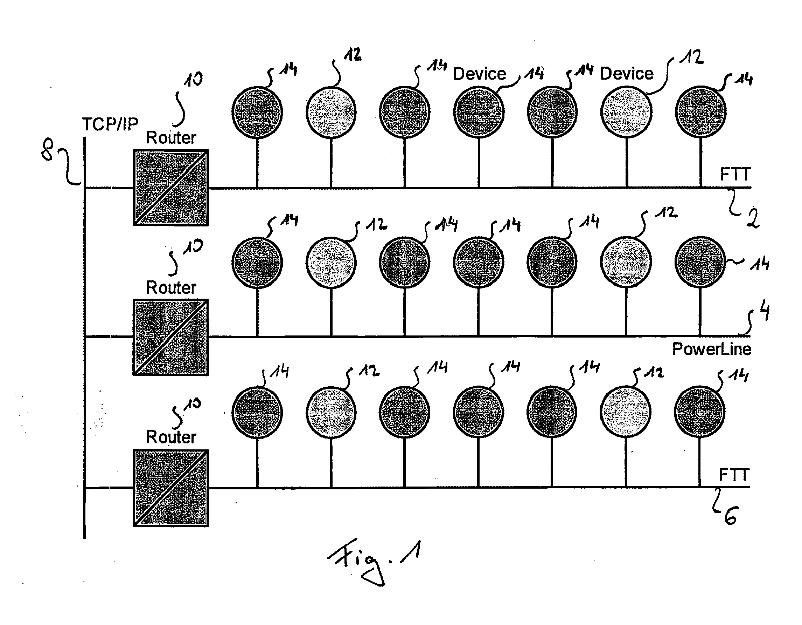

Fig. 1 illustrates an exemplary network according to the present invention comprising network parts 2, 4, 6 and 8. Network parts 2, 4, 6 and 8 use - as different media - FTT, TCP/IP and PowerLine. The network parts 2, 4, 6 and 8 are connected via routers 10. Devices 12 capable of safe communications and devices 14 capable of non-safe communications may be commonly operated in the network.

Devices 12 and/or devices 14 may communicate with each other within the same network part. For example, devices 12 and/or devices 14 of network part 2 may communicate with each other.

Devices 12 and/or devices 14 of different network parts may also communicate with each other. To this end, safe and non-safe communications are carried via respective routers 10 and/or network parts. For example, any of the devices 12 and/or devices 14 of network part 2 and any of the devices 12 and/or devices 14 of network part 4 may communicate with each other over the routers 10 connected to network parts 2 and 4 and via network part 8.

In any case, devices 12 for safe communications use a communications protocol that is (preferably fully) compatible with a protocol used by device 14 for non-safe communications. This may be also referred to as semantic compatibility. Further, safe and non-safe communications may coexist without any effect on each other.

Further details in that regard are given - with reference to preferred embodiments - further below.

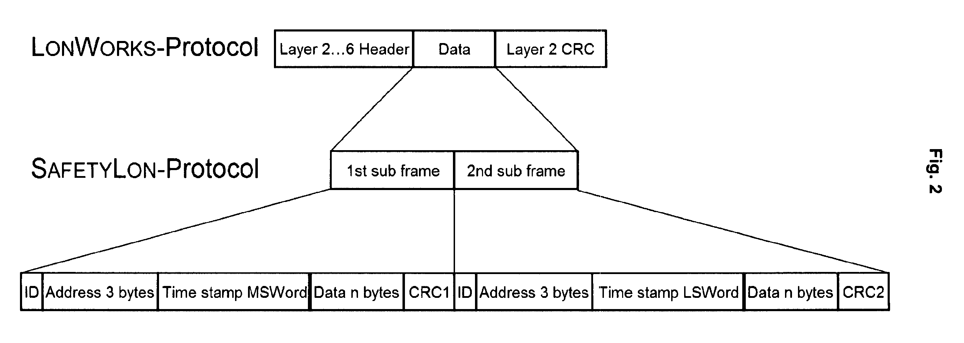

Fig. 2 illustrates a preferred embodiment of a protocol according to the present invention. Further details in that regard are given - with reference to preferred embodiments - further below.

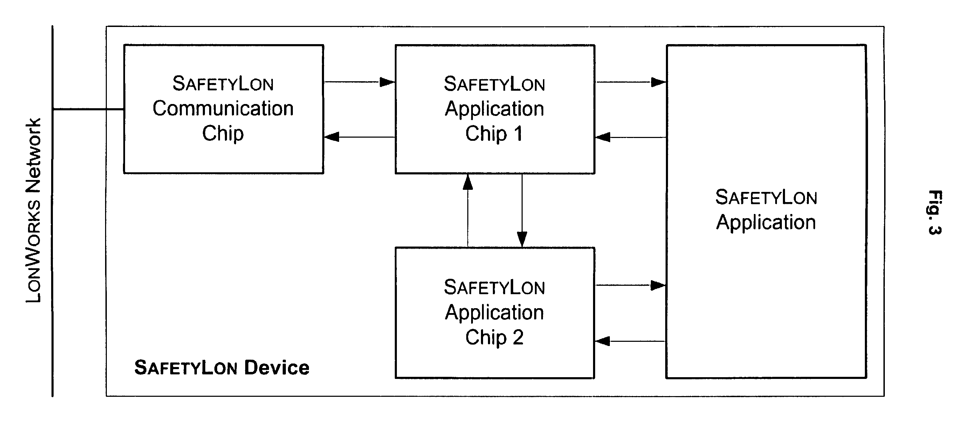

Fig. 3 illustrates a preferred embodiment of a hardware architecture according to the present invention for a device adapted for integration in a LONMARK®-based network. Preferably, communication chip 16 may be a NEURON-chip or a LC3020-chip. Application chips 18 and 20 may be ARM7-processors. Communications between chips 16, 18 and 20 may use two channels. Communications with Application 22 may also use two channels.

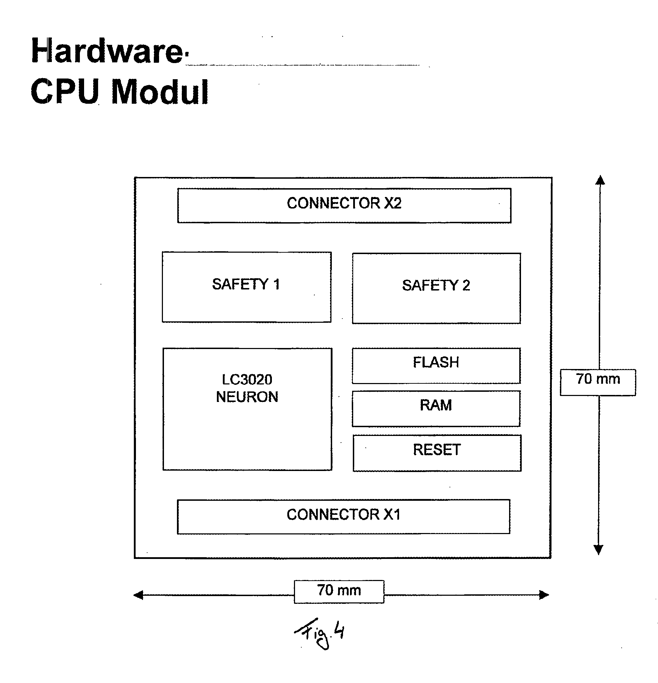

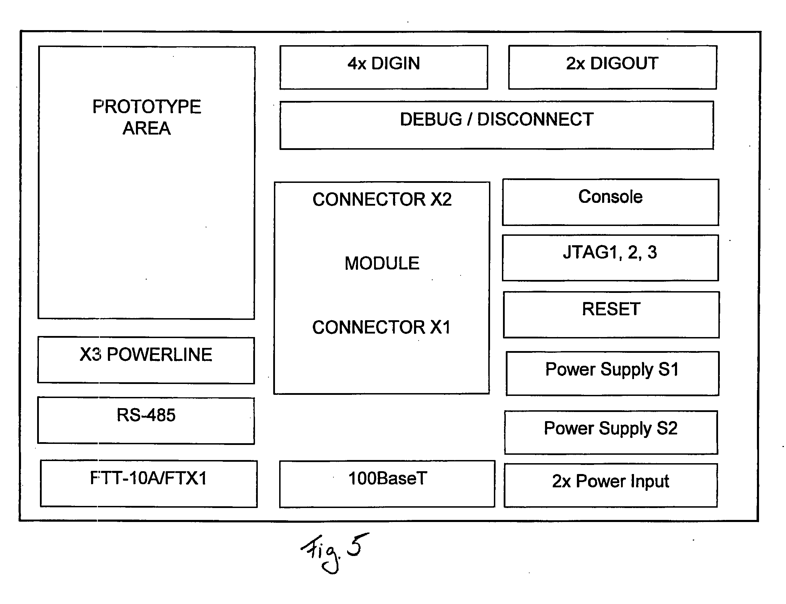

Fig. 4 illustrates a preferred embodiment of a hardware architecture of a prefabricated CPU module according to the present invention and Fig. 5 illustrates a preferred embodiment of a hardware architecture of a semi-finished circuits board according to the present invention.

Further details concerning Figs. 3, 4 and 5 are given - with reference to preferred embodiments - further below.

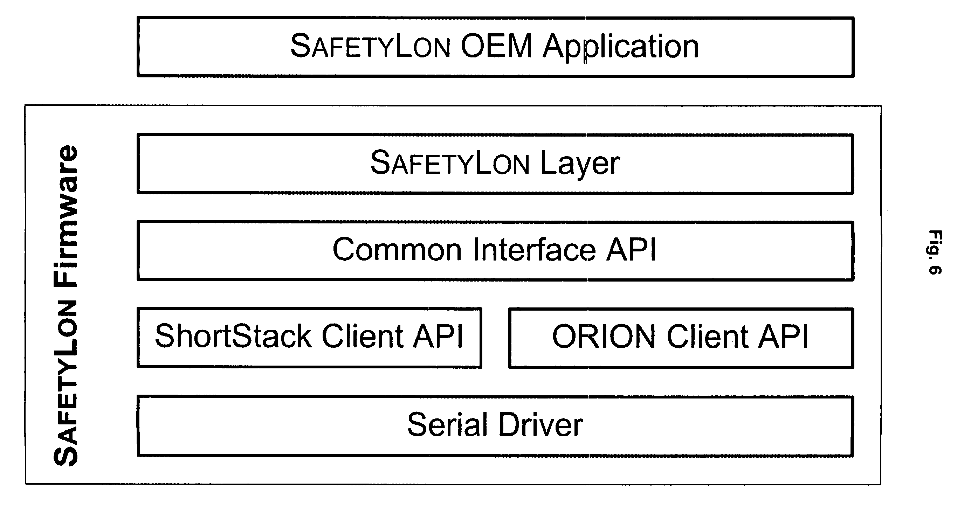

Fig. 6 illustrates a preferred embodiment of a software architecture according to the present invention. Firmware part of the illustrated software architecture comprises software for network communications, protocol implementation and handling, I/O-handling, inter-channel communications, testing, etc. Application part of the illustrated software architecture comprises software specific for the respective application (e.g. software for operation of a sensor or an actuator). Further details in that regard are given - with reference to preferred embodiments - also further below sections "Safety Chip Software" and "Implementation of LonMark® Standard Network Variable Types (SNVTs) for SAFETYLON".

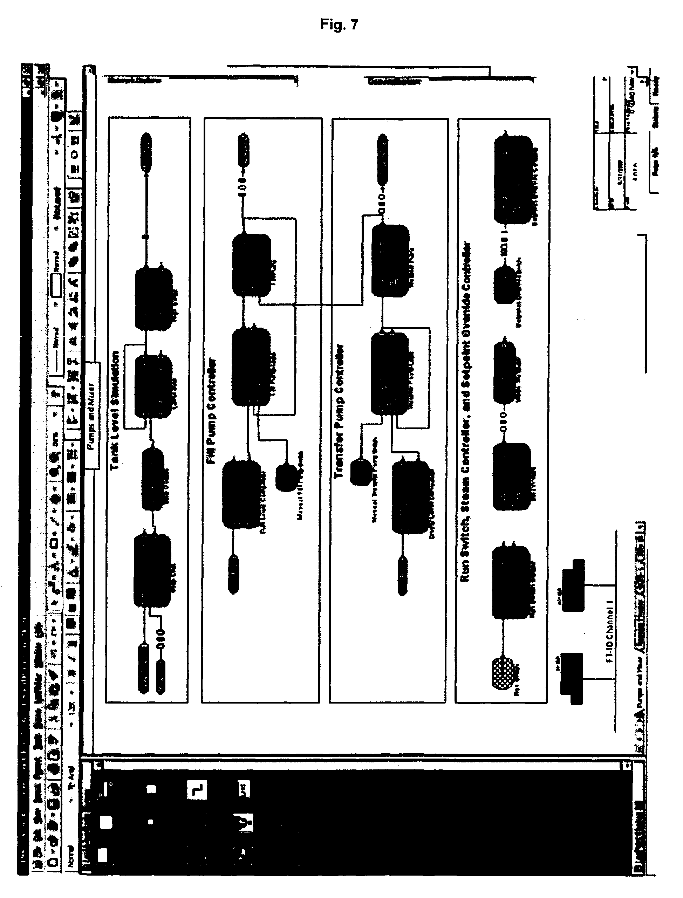

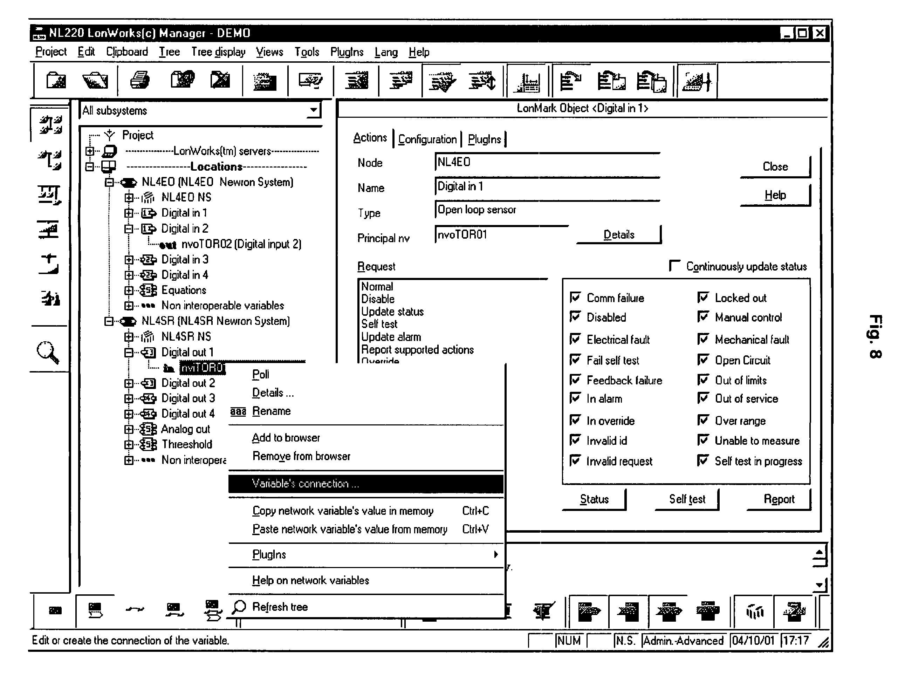

Figs. 7 and 8 illustrates preferred software tools for setting-up and/or putting into operation of an application according to the present invention. By means of such software-based tools, the present invention may be set-up, put into operation as well as modified and serviced during operation. Further tools (not illustrated), e.g. in form of plug-ins and/or add-ins, may be used in order to, for example, establish communications links, connections and/or relations between network components, allocate addresses, set and/or select parameters, etc.

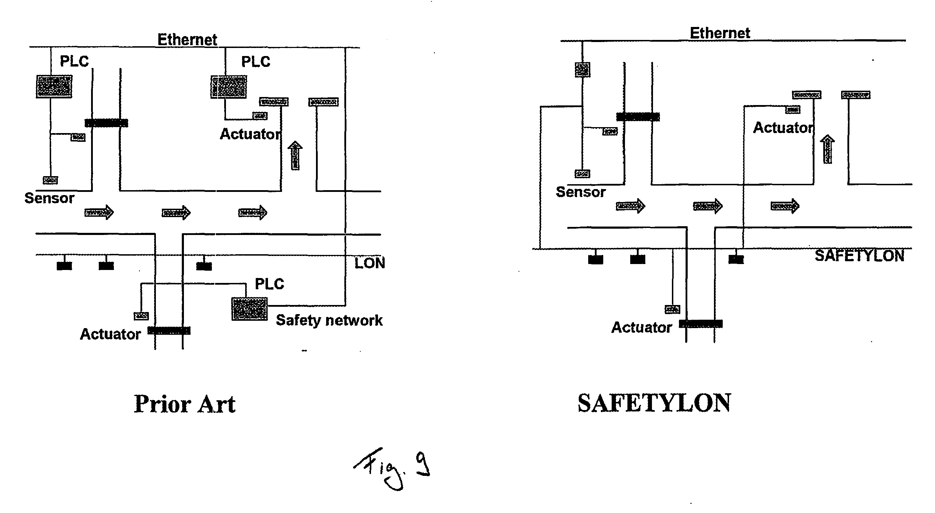

As illustrated in Fig. 9, a safe network according to the present invention - in comparison with prior art - enables to use a single network for any safe and non-safe application, decreases wirings, allows general diagnosis throughout the network and reduces costs for implementation, assembly, operation and maintenance.

The following sections describe exemplary embodiments in greater detail. Any assumption, statement, wording, phrase and the like possibly indicating a limitation is not indented to limit the present invention as such.

**Safety related Devices**

Abbreviations

| Abbreviation | Meaning |
|---|---|
| | |
| 1oo2 architecture | Hardware architecture with 2 channels |
| $\beta$-value | Value of common cause failures |
| $\lambda$-value | Value of stochastic failures per hour |
| $\square_D$ | Probability of dangerous failure (per demand or per hour) |
| $\square_{DD}$ | Probability of detected dangerous failure (per demand or per hour) |
| $\square_{DU}$ | Probability of undetected dangerous failure (per demand or per hour) |
| $\square_{SD}$ | Probability of detected safe failure (per demand or per hour) |
| Consumer | Device which receives data from the network |
| ADC | Analogue to digital converter |
| DC | Diagnostic coverage |
| EMC | Electromagnetic compatibility |
| Fail safe function | Function there no risk can come from the device or the system |
| Fail safe unit | Specific hardware system which is able to reach a safe state |
| Fault | Malfunction of a component or a system |
| Input device | Device which gets data from a peripheral sensor |
| LSB | Least significant bit (byte) |
| MSB | Most significant bit (byte) |
| OSSD | Output Signal Switching Device |
| Output device | Device which transfers its data to an actuator |
| PFD | Probability on low demand |

(continued)

| Abbreviation | Meaning |
| --- | --- |
| PFH | Probability on high demand (continuous mode) |
| Producer | Device which transfers data to the network |
| Proof test | Complete test of the device (can be done off line) |
| Save state | State there the defined fail safe situation is reached |
| SIL | Safety Integrity Level |
| SFF | Safety Failure Fraction |
| Stack at failure | Device has a malfunction and puts the output to a constant voltage |

Safety related I/O-devices

For data communication, SAFETYLON uses devices for interfacing peripheral signals. These devices may be directly connected to the network and are able to transfer their information via the network. Interfaces, which are used to get peripheral data from the field and send their information via the network to other devices, are called producers. Devices, which receive their information from the network and transfer the content to the peripheral environment, are called consumers. In some cases, complex devices can read peripheral data and also transfer data to the output. Such devices are a combination of producer and consumer.

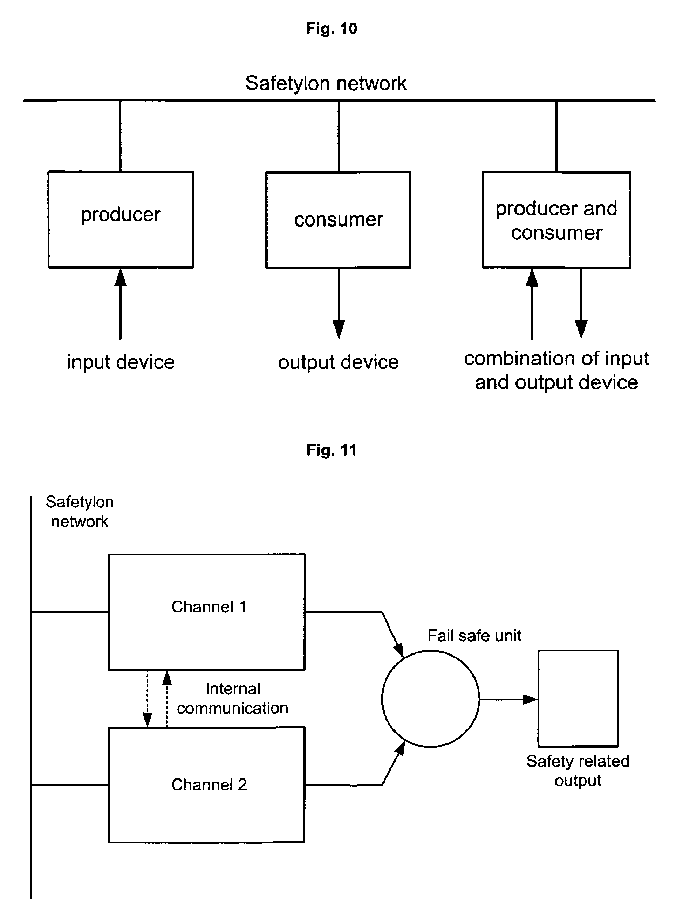

Fig. 10 shows an exemplary SAFETYLON network with different devices, which are used as producer, consumer and combined products with producer and consumer function. As it can be seen from Fig. 10, producers are used as input devices and consumers are used as output devices. Even if devices have no direct interface to external sensors or actuators, they are also named producers and consumers.

For all safety related operations such devices have to meet a lot of requirements in order to avoid any risk of malfunction. This document describes in detail all necessary requirements for such devices.

Safety level

Using electronic components for safety applications can only be done after having a risk assessment. This assessment shows the danger, which can be caused by such device in case of a malfunction. If humans are involved in the process of automation with the use of electronic devices, normally the safety level is higher than in other cases. With increasing safety level, the architecture of electronic devices has to become more complex. In accordance with international standards (e.g. IEC 61508 or EN 954-1) safety integrity levels (SIL) or categories (B to 4) are used to classify the application of safety. But the standards not only provide safety level for the application, but also provide recommendations for architectures of the devices in order to comply with these level schemes. For example a category 2 device can be built up with a standard structure and a fault may cause non-safe operations. However, if a device will be used for category 4 a fault must never cause an non-safe operation. In this case, redundant hardware architecture is necessary.

The present invention is intended to meet the requirements for category 4 (according to EN 954-1) and SIL 3 (according to IEC 61508). If the requirements are fulfilled, the devices can directly operate with machines or plants, where humans run the risk of being injured or even killed by fatal malfunctions. By meeting these requirements a device is suitable for general safety purpose.

Fail safe situation

Electric, electronic or mechanical components have a certain probability of failure. This probability comes from different processes with a physics background. To calculate the probability the $\lambda$-rate is applied, which gives the realistic failure rate per hour of a component or a hardware structure. So any architecture has to care about such failure rates in order to set the whole device into a safe state after a fault happens. The associated function which activates the safe state is called fail safe function. For producers the fail safe situation is defined as a function, whereby no data is sent to the safety network. In this case the network itself in combination with the connected consumer performs the safety function, because without receiving any data from the network a consumer automatically switches off its outputs. So the definition of the safe state for a producer is the function of "doing nothing". A consumer supplies external equipment. This equipment normally is connected to 0 Volt. So if the consumer (as an output device) forces its outputs to 0 Volt, no longer any current can supply the external equipment (e.g. actuator). Reaching "0 Volt" is defined as safe state for an output device.

Hardware architecture

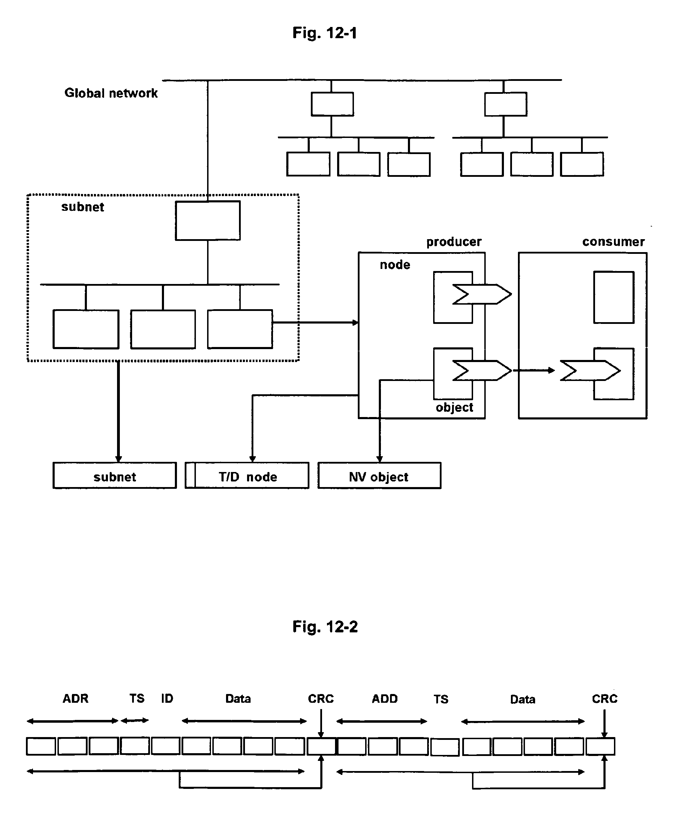

Redundant hardware architectures for the use of simple devices are called 1oo2 architectures. There are two independent channels, which have their outputs directly connected to a fail safe unit. If one of these two channels does not agree to the specific operation (from application or internal operation), any channel is able to switch off the fail safe unit. Fig. 11 shows a structure of an output device. Both channels receive the data frame from the network. Each channel analyzes the data frame and issues an agreement or a disagreement to the fail safe unit. Only if both channels agree to set the output to a voltage, the fail safe unit sets the output. For realistic architectures both channels have a cross-communication between themselves. A discrepancy of data analysis will then directly inhibit the output.

Identification of failures

Even if safety related devices are built up with redundant hardware architecture, there is a probability of having more than one failure, which can cause non-safe operations within specific combinations. In accordance to the standard , also multiple failures must not have the consequence of causing an non-safe situation. So it becomes very important to detect all intrinsic failures and to bring the device into a safe state by identifying the first failure. The architecture also has to be built in such a way, that new failures which occur after the safe state has been reached, will never cause a non-safe state (e.g. raising the output to higher voltage after a second failure). This requirement can only be fulfilled, if the device tests all important components during operation. The diagnostic coverage (DC) produces a value of the coverage about these tests for all components. Depending on the structure of hardware not every failure will necessarily cause a dangerous situation. Many failures only cause a reduction of availability but have no consequences regarding safety. The ratio of such failures is described by the safety failure fraction (SFF). A fail safe hardware structure has a SFF of 100%. Real systems will not reach a total SFF-value of 100%, because there are some components, which can cause "common cause failures". Such components are e.g. power supplies, which can cause fatal malfunctioning of several devices. The value of these common cause failures is described by the $\beta$-factor.

Dual channel connection to the network

The safety structure of SAFETYLON uses data duplication within every frame. Any producer creates two nearly identical subframes for every logical network channel. One of the controllers merges both subframes and sends the total resulting frame onto the network.
On the other side a consumer receives the total frame from the network and an internal controller splits it into two subframes and transfers both subframes to each channel.
Fig. 12 illustrates a, in its lower portion, frame structure of SAFETYLON .
In order to detect a failure, a consumer performs the following functions:

Receive the total frame
Split the total frame into two sub frames
Transfer of each subframe to its respective channel

Each channel performs the following functions:

Comparison of the frame format to the program values
Identification of right address
Calculation of CRC
Comparison of the time stamp with the internal real time clock

After the agreement of both channels to the correctness of all data items, the device compares the contents of all data between both sub frames (bit-for-bit).
If the comparison is correct, the output can be set (if the device itself is not out of order).

Accordance to standards

The international standard IEC 61508 gives not only an overview about the safety architectures; it contains also a lot of detailed requirements of the components and the system. In addition to this, the standard requires a certain value of residual error probability for a fatal error. A device or a system can only meet a SIL level if a calculation has been made, which shows the required probability.

PFD, PFH and λ-Value

There are two different probabilities described in the standard. The first probability is called "probability on demand, or probability on low demand" (PFD). This probability is used for systems, which will require a specific safety function on demand. Other systems, which have to control the "safety function" during a long time of operation, use another probability, which is called "probability on high demand" (PFH).

A SAFETYLON device will be calculated by the PFH function. In order to reach the requirements of SIL 3, the residual error probability has to be less than $10^{-7}$ per hour. In real systems, the error probability should be less than this value, because a machine, plant or a system always contains a lot of devices. The PFH value is always given for the whole system. For example, a single device should reach the error probability of $10^{-8}$ per hour, if 10 devices are used for the complete system.

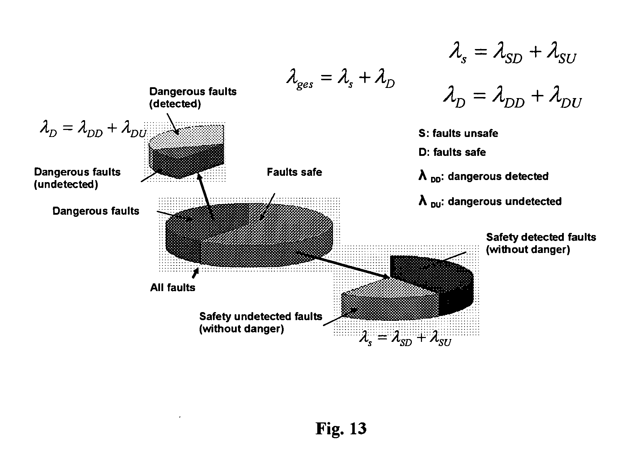

In order to achieve these requirements, the architecture and the λ-values are very important. Fig. 13 gives an overview about all possible failures and the basic calculation of the specific λ-values. As it can be seen from Fig. 13, not all failures will cause a fatal situation. So some failures can cause dangerous faults, and some failures will set the device to a non-dangerous situation. For availability all λ-values have to be very low. For safety, only the dangerous λ-values have to be very low.

Dangerous λ-values form two parts of failure models:

Dangerous failures, which cannot be detected at any time
Dangerous failures, which can be detected

Both failure types have to be very low. The design of the device has to be made in such way, that all (if possible) failures will be detected. This can be done by hardware or software testing (e.g. RAM-test). In addition to this, the software test has to be done in a certain time period, which guarantees a failure free operation between two test cycles.

Failure model and calculation

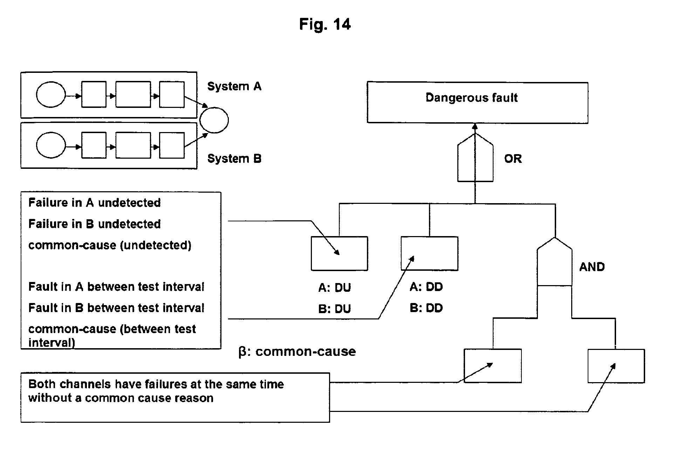

The structure of SAFETYLON devices is built up in a 1oo2 structure. There are two independent channels, which both drive a fail safe unit. If one of the two channels does not agree to the operation, a safe state has to be activated. Fig. 14 shows a logical sequence diagram for faults from a 1oo2 system.

A dangerous situation happens if one of the following situations occurs:

Both channels have undetected failures or common cause failures
Both channels have failures, which can be detected, but these failures occur between test intervals or if a common cause failure occurs within this test interval with fatal consequence
Between test intervals, each channel has a failure, which causes a non-safe operation without being detected by the fail safe unit

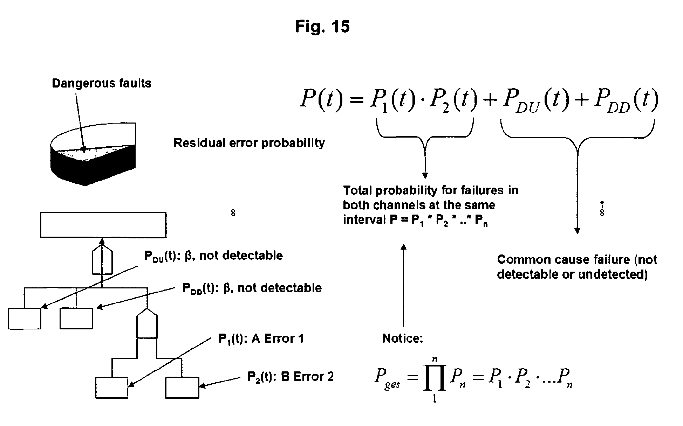

Fig. 15 illustrates calculation for the failure model of a 1oo2 system. The total residual error probability is made up by the sum of three probabilities:

Probability of having two independent failures in both channels
Probability of having undetected failures, which will cause an non-safe situation
Probability of having detectable failures between test intervals.

In order to make a suitable design for a safety related device, the following measures are provided.

Use of the right architecture
Use of components with a very low λ-value
Avoidance of all systems with common cause failures
Possibility of testing all components, which can cause fatal faults
Use of cyclic tests within a suitable time frame

Fundamental architecture

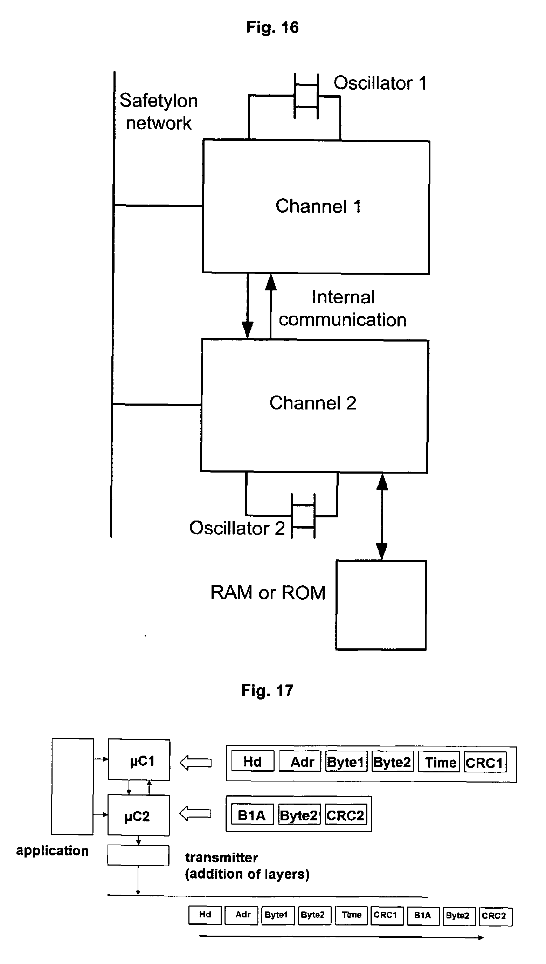

A SAFETYLON device is built up as follows: If a failure occurs, the device will detect the failure and will reach a safe state before a second or additional failure can cause a fatal function. The consequence is that a lot of failures will never cause an non-safe situation. The probability of having a fatal fault is less than $10^{-8}$ per hour . A preferred structure for such devices can be seen from Fig. 16

Both channels are connected to the SAFETYLON network. There is no need that in reality both channels have their own interface to the network. In order to reduce costs and safe resources, only one channel can be used for data transfer and this channel will supply the other channel with the subframe's information.

Both channels have their own independent oscillator. The oscillators are built up in such way, that no interference between these oscillators is possible. By the cyclic comparison of the internal clocks (incremented by two oscillators), any drift of the oscillators or a fundamental fault of one channel can be detected. If a channel does not receive the clock information from the other channel for a time, which is longer than the programmed period, a safe state has to be reached. By using this structure an external watchdog is not necessary.

There is a serial communication between both channels. Via this communication the subframes are transmitted cyclically. In addition, both controllers are periodically tested and the test results are also transmitted by the serial communication.

After power-up, both controllers are tested. During operation the internal controllers are tested by checking the correct data transmission and the correct sequencing. If a memory is used, this memory (RAM or ROM) has to be completely tested after power-up. The quality of the test has to be high. Also during operation all safety relevant components and functions have to be tested. In reality this can only be done in small segments.

Input device

The input device works as a producer. Both independent channels produce their own subframe and both subframes are connected by the interface controller (Fig. 17).

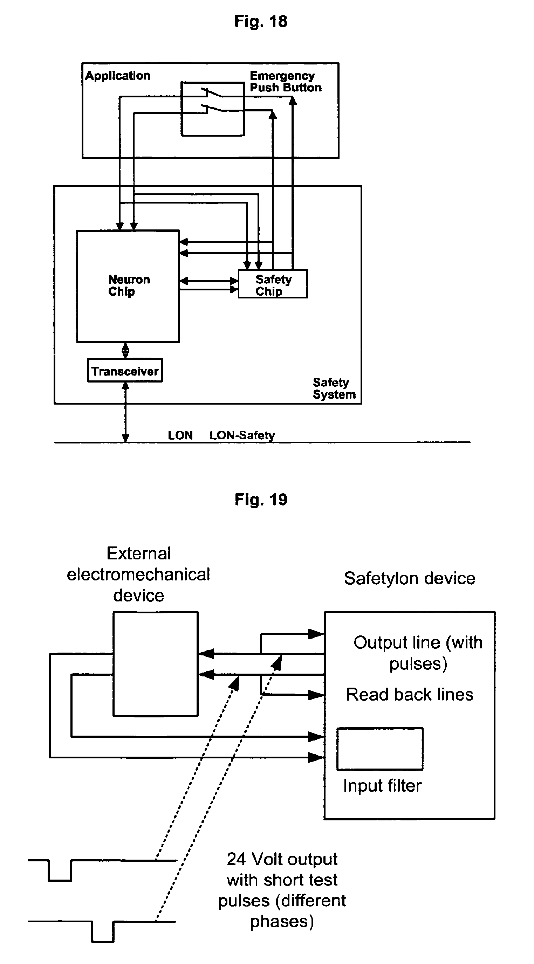

The time stamp may include two parts, which are produced by each channel (higher and lower byte). This function avoids that a systematic failure (e.g. sleep of a subframe or one channel) will not be detected. Input devices transfer their data from a peripheral unit. Such peripheral units typically are electromechanical contacts or switches. The most common application is the direct connection of an emergency push button to a safety related device for SAFETYLON (Fig. 18).

The attached safety device is responsible for detecting any failures of the connected external electromechanical device:

Malfunction (e.g. no connection between the two contacts)
Shortcut of the cabling (two sensing wires)
Shortcut of one or two wires to a higher voltage (e.g. 24 Volts)

A shortcut to ground or an open wire need not be detected, because this situation is equal to the "off-situation". In any case, if one of the two feedback wires sends the information of 0 Volt (for a longer period) the device must identify this as an "off-situation". This situation is always the safe situation for the machine or plant.

An architecture for solving these requirements is shown in Fig. 18. A SAFETYLON network chip (709 unit) is connected to the network via a transceiver. In order to fulfill the 1oo2 structure, a safety chip is added. Both chips talk together by the use of a serial link. As can be seen, the emergency push button is not directly connected to 24 Volts, it is connected to the output line of the safety chip. This circuit has the advantage of producing information about failures from the cabling and the external device.

Fig. 19 shows how such a test of external components works. The SAFETYLON device uses internal test pulses to supply the external electromechanical device. The test pulses normally have the output voltage of 24 Volts. From time to time (about 50 to 5000 msec) test pulses travel through the circuitry. A test pulse forces the output voltage to 0 Volt. The duration of these pulses is about 240 $\mu$sec. The two test patterns do not transmit their pulses at the same time, but with an opposite phase.. By reading back these pulses, any shortcut or connection to 24 Volt can be detected. As it can also be seen, in order to make proper use the 1oo2 structure, both channels have to read back the information coming from the external device.

Using this detection principle it will also be possible to read back the test pulses from the input side. However, the principle then has the disadvantage of being less flexible. Because in safety related applications there are a lot of intelligent devices, which produce such test pulses on their own. These devices are able to read back their own test pulses, and in case of a shortcut, these devices reach a safe state. The test pulses of such intelligent devices are unknown and not easy to work with. So it makes sense, to read back the pulses from the input side and to use an input filter in order to uncouple such test pulses (if they exist).

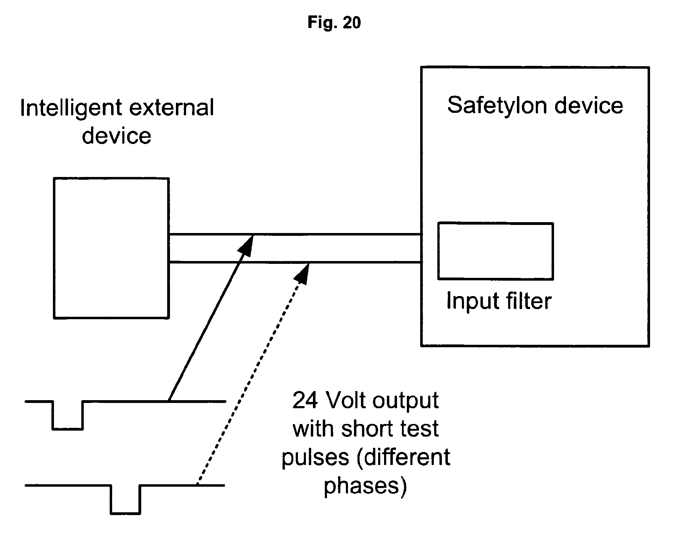

Fig. 20 shows the connection of an intelligent device to a SAFETYLON device. Intelligent safety related devices use pulses by a standard, which is called OSSD (Output Signal Switching Device). The frequency (repetition rate) of the pulses is not defined, but for the most popular device this rate is between 50 and 5000 msec.

The duration of the pulses is between 100 and 1000 μsec. So the input filter has to reduce this pulse duration into a constant voltage. If the duration of the input voltage is longer than 1 msec (at 0 Volt level), then the input has to detect a 0 Volt signal (logical low).

For all applications of category 4 (according to EN 954-1) both inputs signals have to be read simultaneously. If the inputs do not match, a malfunction of the external device is detected. This has to be monitored and the safe state has to be reached (low signal).

If an error occurs the following operations are possible:

Send out a logical "low" to the SAFETYLON network
Stop sending any further data

It is preferred to continue sending data, because the network is always informed about the right operation of the device. If a diagnostic channel exists on the network a malfunction has to be transmitted in addition to the "low" state. In order to detect any failures from the input circuit, also the internal input circuit has to be tested. This is necessary, because a "stack at failure" from any input channel to an internal voltage will have fatal consequences. Such a failure identifies an external electromechanical device as operative, but in reality it will be switched off. For example an emergency push button is disabled, but the safety device will not identify this situation.

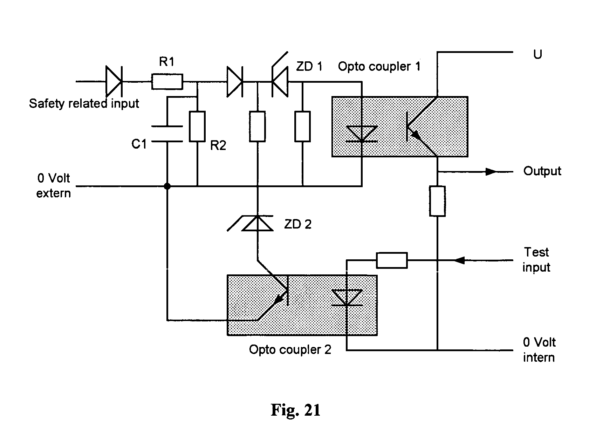

Fig. 21 gives an overview on how an input channel can be tested. The external input from the peripheral device is connected to the safety related input. The resistors R1, R2 and the capacitor C 1 are used to form a filter in order to generate a constant voltage from the external signal with/without test pulses. The Zener diode ZD (e.g. 6.2 Volts, depending on the voltage reduction level of R1 und R2) supplies the optocoupler 1 with current, if the input voltage is higher than 12 Volts. In this case the output on the secondary side of the optocoupler becomes active high. In order to detect a stuck-at failure, the second optocoupler is used to switch off the input circuit for a short time. A malfunction of the Zener diode 1 can be detected by the use of the Zener diode 2, which will only be active if the input voltage is high enough.

The test function does only work in case of supplying the input with an active signal. If there is no input signal a test isn't necessary, because this IS the "safe function". Even if there is a broken wire or a broken connection (open resistor R1) this will always cause a safe function and it is not necessary to detect this failure.

It is preferred to use both channels for testing the input circuitry. Thus, controller 1 can issue the test pulse and immediately inform controller 2 via the serial line. Then, the controller 2 reads the input and identifies the correctness of the test pattern.

If more than one safety related input is used by one device, it is also recommended to use test patterns with opposite phases, in order to detect shortcuts between different input channels.

Output device

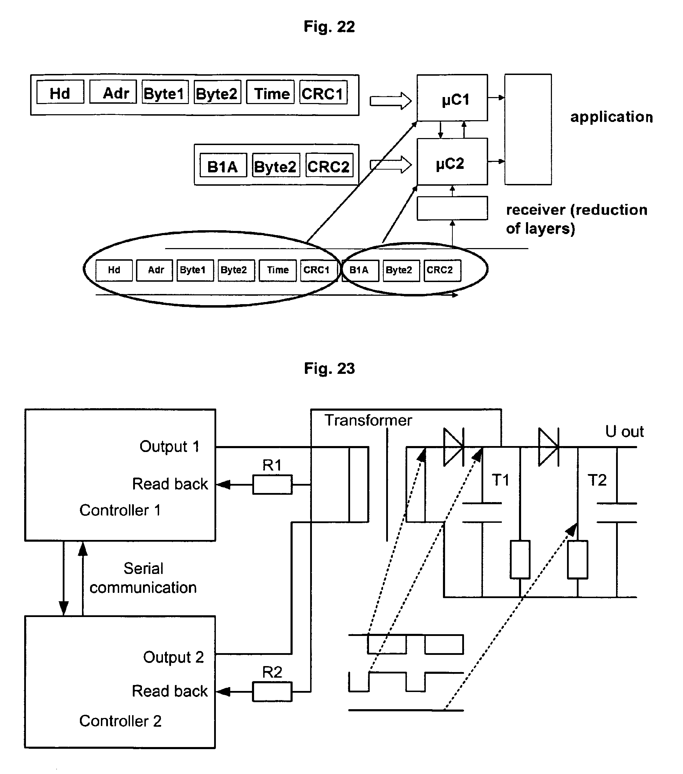

The output device for SAFETYLON is based on a consumer device. In accordance to the principles of safe data transmission, this device has to receive the SAFETYLON frame, and one controller has to split it into two subframes. Each subframe will be checked by one or both channels. If both channels agree on the CRC, time stamp and data information, the device is able to transfer the information to the output (Fig. 22).

An output device is directly connected to an actuator. Nearly all dangers of a machine or plant are caused by actuators. So the output device is responsible for handling such dangerous situations. In order to avoid any risks, an output device must never reach an non-safe state.

In order to achieve this, the following structures are integrated into the output device:

Two independent output channels with two switch off elements
A fail safe unit, which is always able to switch off the output

The architecture is built up in such a way, that there is no possibility of having a defect on both output channels. This can be fulfilled by the following structure:

No common cause failures
Excellent diagnostic functionality

One important structure within the output device is a "fail safe unit". This unit fulfills the following functions:

> If there is a disagreement of both channels, the fail safe unit has to switch off the output.
> If a common cause failure occurs (e.g. both controllers have stuck-at situation on the output), the fail safe unit has to switch off the output.
> If the power supply or another component causes a common cause failure (e.g. overvoltage), the fail safe unit has to switch off the output.

A unit, which meets all these requirements, can be built up in different ways, e.g., as shown in Fig. 23.

The fail safe unit is built up with a transformer. A transformer is an excellent component for this function, because of its dynamic operation. A voltage can only be transferred to the secondary side if a voltage and a frequency is supplied. So by the use of a circuit like Fig. 23, controller 1 produces a suitable frequency for the transformer. Controller 2 supplies the transformer with a voltage. Each controller is able to switch off the transformer. Controller 1 has to switch off the frequency or controller 2 has to switch off the voltage. These "switch off functions" from both controllers are absolutely independent. Each controller is unable to inhibit the other controller to perform its switch off function in case of a discrepancy. So only if both controllers agree on the output function, the output can be set (U out).

The correct operation of both controllers can be controlled by using test pulses. For controller 1 the output frequency contains test pulses, where no frequency is available. Also controller 2 uses test pulses, where the constant voltage is set to 0 Volt for a short period. The effect of these test pulses (from both controllers) can be read by the "read back lines" from both controllers. It is important to use two resistors R1 and R2, which cannot cause a shortcut (e.g. Melf resistors). So a total malfunction of one or both controllers has no effect on the other one.
The capacitors have to be designed in such way, that the filter time T 1 detects the test pulses. The filter time T2 produces a constant voltage. But also T2 should not be too long, because in case of a fail safe situation the output (U out) has to switch off quickly.

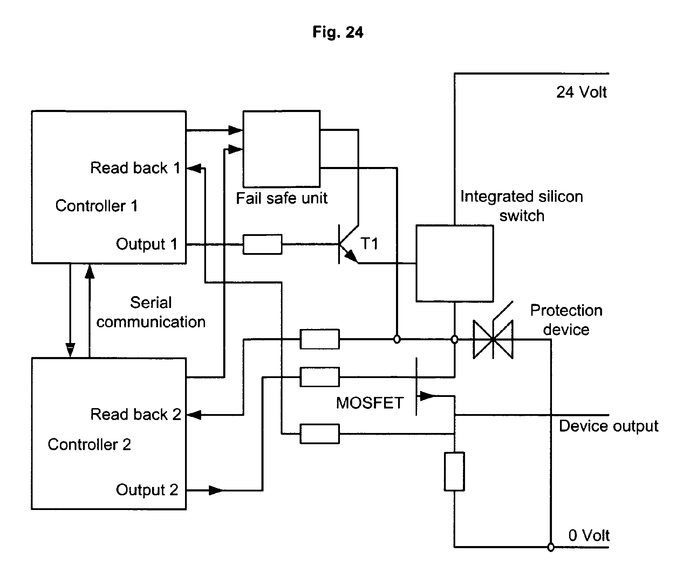

The shown fail safe circuit has also a very high immunity against common cause failures. Even if both controllers have a malfunction at the same time and a (very unlikely) stuck-at failure, the unit will not transfer any voltage to the secondary side. So it is highly recommended to use such a fail safe unit in order to reach the requirements for SIL 3.
The output of the safety related device must use two independent channels and must be tested during operation. Fig. 24 gives an exemplary fail safe output circuit with two channels.

Both controllers are used to supply the fail safe unit. Only if the fail safe unit is active the transistor T1 is able to switch on the integrated semiconductor switch. The function of the semiconductor switch can be tested from the output 1 of controller 1, which contains test pulses during operation. This can be done by controller 2 from the input "read back 2". If the semiconductor switch is in an "on state", the MOSFET can switch on the device output. This will be done by the output 2 from controller 2. Also the controller 2 uses test pulses in order to test the MOSFET. This can be read by controller 1 by "read back 1".

In order to avoid any common cause failure, the two output transistors (semiconductor switch and MOSFET) should not be built up in identical technology. It is very important to use additional protection components in order to avoid damages on both output switches by EMC. By use of the described technology the output contains test pulses. These test pulses have a very short time period (100 to 200 μsec) and standard electromechanical devices (e.g. relays) are not effected. But electronic devices must be built in such a way in order to be compatible with OSSD outputs. In addition, capacitor loads must be avoided. For some applications the test pulses must be switched off.

The output device (and also the input device) needs a power supply. A malfunction of the power supply can be detected by the serial communication between both controllers. But if the voltage from the supply will increase to a very high voltage, both controllers can be destroyed within a short time. So it becomes very import to identify any malfunction of the power supply and to reach a safe state if there is a very high overvoltage.

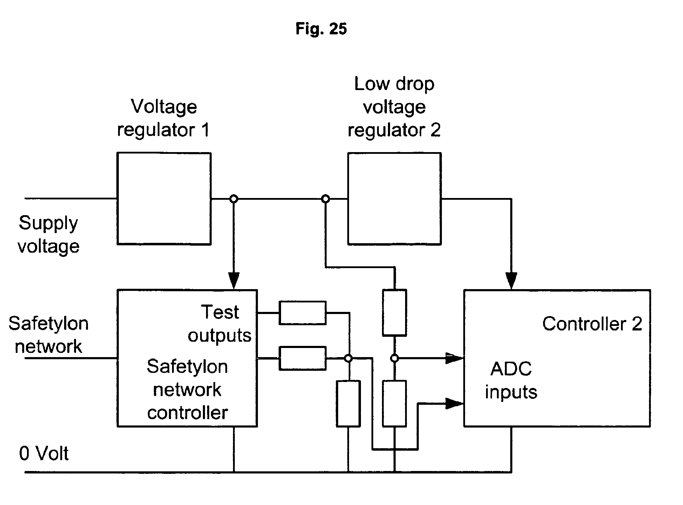

An undervoltage normally is detected by the controllers themselves. This functionality can be checked by the serial communication. Overvoltage can be detected only by measuring the input voltage. Fig. 25 shows a typical Power Supply circuit.

The supply voltage (e.g. 24 Volts) is used by the voltage regulator 1 to supply the controller 1, which is the network interface controller. The second voltage regulator supplies the controller 2. The controller 2 reads the supply voltage from controller 1 and reaches a safe state if there is an overvoltage. If the controller 1 has no ADC on board, the ADC from controller 2 has to be tested from time to time. This can be done by providing different voltages at the test outputs of controller 1.

The second regulator (low drop regulator) has to be built in such way that it will survive for a few seconds after the first voltage regulator is out of order. So that there is enough time for controller 2 to reach a safe state. It is highly recommended that controller 2 also measures its own supply voltage in order to avoid an undetected malfunction of the voltage regulator 2.
In combination with a fail safe unit any additional failure (malfunction of voltage regulator 2) after the first malfunction (voltage regulator 1) cannot cause additional dangers.

**Software Requirements for a SAFETYLON Application**

Definitions, Acronyms, and Abbreviations

| Abbreviation | Meaning |
|---|---|
| | |
| Consumer | Hardware I/O part or logically based part of a SLN which receives data from the network |
| CRC | Cyclic Redundancy Check |
| DSF | Device system file |
| EIA709 | EIA 709 and EIA 852 |
| Fault | Malfunction of a component or a system |
| HEDA | High end safety related device architecture |
| Input device | Device which gets data from a peripheral sensor |
| LNS | LonWorks Networks Services |
| NID | Unique device identification (NEURON ID / EIA709 ID) |
| NMS | Network management software |
| Output device | Device which transfers its data to an actuator |
| PRM | Pre-run mode |
| PRDADR | SAFETYLON Address information of a producer |
| Producer | Hardware I/O part or logically based part of a SLN which transfers data to the network |
| RM | Run mode |
| SL-ADR | SAFETYLON Address |
| Safe state | State at which the defined fail safe situation is reached |
| SDA | Simple safety related Device Architecture |
| SADR | SafetyLon Address |
| SIL | Safety Integrity Level |
| SLN | SAFETYLON Node |
| SLNADR | SAFETYLON Address information of a SLN |
| SLTS | SAFETYLON Time Server |
| TM | Test mode |
| TREQ | Time Synchronization Request |
| TRES | Time Synchronization Response |
| MFC | Microsoft Foundation Classes |
| IDL | Interface Definition Language |
| SLL | SAFETYLON Library |
| SLA | SAFETYLON Application |

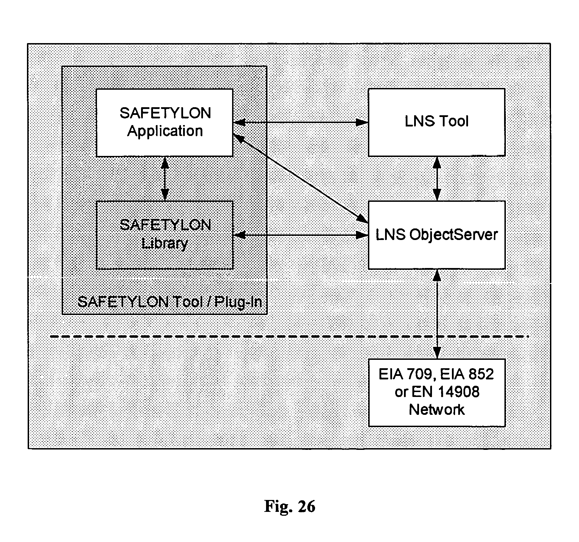

Fig. 26 shows a schematic architecture of the SAFETYLON-Tool. The tool is divided into the SLL and the SLA. The SLA is responsible for instantiating of the LNS ObjectServer and the LNS Event Handler. The SLL allocates functions to the SLA. It handles all safe functions of the network and has to support all functions to configure a SLN. Via the SLA it is possible to commission a SLN. To get information of non-SLNs, the SLA provides an interface to the LNS-tool (e.g. identification of binding connections of SLN and non-SLN).

Software architecture

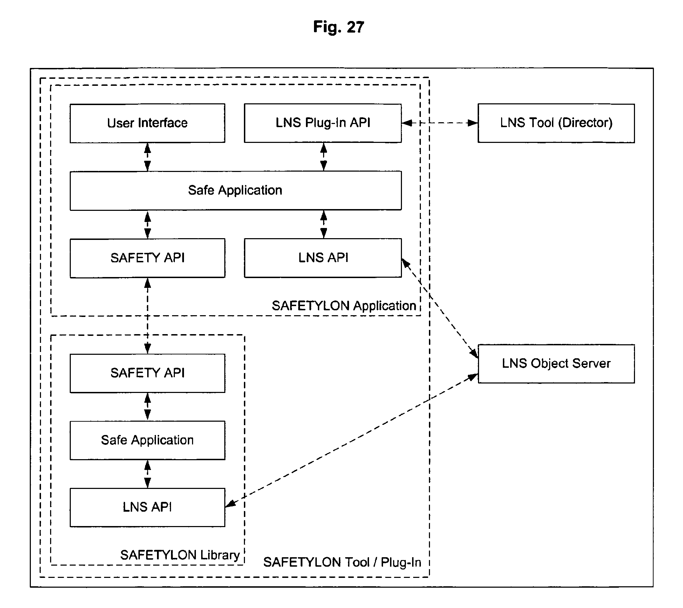

Fig. 27 illustrates the system architecture of the SAFETYLON Tool / Plug-In.
With the SLA it is possible to configure one or several SLNs, depending on the network system design. The application contains an interface to the SLL and is instantiating the SLL within the initialization process. With the functions that can be used out of this library, the application can configure the SLNs. The User-Interface shows the operator the resources of the SLNs that can be modified. To retrieve information from the devices, the application uses the interface to the LNS Object Server API, which is required also because the SLA is standard LNS plug-in.
The instance of the LNS Object Server will be created by the SLA and then passed through the SAFETY API to the SLL together with at least one LNS network and system object during initialization. Therefore both software parts use the same instance of the LNS Object Server. The event-sink for handling LNS events must be implemented in the SLA. So the changes in the LNS ObjectServer event handling should not influence the functionality of the SLL.
When the SLA is started this will be done by an ordinary LNS tool (director application) by using the LNS Plug-In API. The SAFETYLON application should be implemented as a System-Plug-in.

Application

While working with the LNS based tool, it is necessary to know who performed modifications with the tool. Therefore the tool must run as a local LNS Client.
Basic functions of the application are listed as follows:

  User login (user database, optional),
  A user login can be used to store the user name with the modification(s) in the log file
  Log file (a log file is useful for verifying modifications that have been made.)
  Local LNS Client verification.

The SLA makes sure that it is running as a local LNS client. This happens when initializing the ObjectServer and opening the network.

Device Information

In the following, functions of device information are listed:

  Tool version: this version is the current version of the device modification. It is preferred to save this last version information to be sure that no out of date data can be transmitted into the device. Wrong data can be verified by the device.
  Device type (host controllers) (This information avoids wrong application downloads into wrong device types. A download will be verified by the device.)
  Application version (host controllers): this version verifies the current version in the device with the current version in the database. It will help to download older application versions rather than newer ones. In this case a user message will be displayed by the SLA. Older versions mostly contains data used for diagnostic purposes.
  SADRs: using SLL, SADRs of the device are saved once they have been generated and transmitted to the device. SADRs will be displayed by the SAFETY Application.
  Operation mode (host controllers): operation modes are used for diagnostic purposes and are processed when a device is online. Moreover the SLA is able to set the device into run mode (if allowed). The device itself may initiate a safe verifying if the forced operation mode is allowed.
  SAFETYLON Error log (host controllers): error logs are used for diagnostic purposes and are processed when the device is online using SLL. Afterwards those error logs can be displayed and saved by SLA.
  SAFETYLON Statistic registers (host controllers).

Device Operations

In the following, functions of device operations are listed:

Individual identification: identification may require user interaction and is supported by the SLL . The user interaction is supported by the user interface of the SLA.

Individual replacement: replacement may require user interaction and is supported by the SLL . The user interaction is supported by the user interface of the SLA.

Individual (or global) application download for host controllers: application download for host controllers requires user interaction and is supported by the SLL. The user interaction and the display during download is supported by the user interface of the SLA.

Outputs

Address and binding information, which will be described further below, may be exported to a spread-sheet application and may be printed.

Functions of outputs are listed as follows:

Spread-sheet table with address and binding information: such tables are used to verify address and binding information.

Print out of address and binding information.

**Software Requirements for SAFETYLON Library**

Definitions, Acronyms, and Abbreviations

| Abbreviation | Meaning |
| --- | --- |
|  |  |
| Consumer | Hardware I/O part or logically based part of a SLN which receives data from the network |
| CRC | Cyclic Redundancy Check |
| DSF | Device system file |
| EIA709 | EIA 709 and EIA 852 |
| Fault | Malfunction of a component or a system |
| HEDA | High end safety related device architecture |
| Input device | Device which gets data from a peripheral sensor |
| LNS | LonWorks Networks Services |
| NID | Unique device identification (NEURON ID / EIA709 ID) |
| NMS | Network management software |
| Output device | Device which transfers its data to an actuator |
| PRM | Pre-run mode |
| PRDADR | SAFETYLON Address information of a producer |
| Producer | Hardware I/O part or logically based part of a SLN which transfers data to the network |
| RM | Run mode |
| SADR | SAFETYLON Address |
| Safe state | State there the defined fail safe situation is reached |
| SDA | Simple safety related Device Architecture |
| SIL | Safety Integrity Level |
| SLN | SAFETYLON Node |

(continued)

| Abbreviation | Meaning |
|---|---|
| SLNADR | SAFETYLON Address information of a SLN |
| SLTS | SAFETYLON Time Server |
| TM | Test mode |
| TREQ | Time Synchronization Request |
| TRES | Time Synchronization Response |
| MFC | Microsoft Foundation Classes |
| IDL | Interface Definition Language |
| SLL | SAFETYLON Library |
| SLA | SAFETYLON Application |
| | |

Fig. 26 shows a schematic architecture of the SAFETYLON-Tool. The tool is divided into the SLL and the SLA. The SLA is responsible for instantiating of the LNS ObjectServer and the LNS Event Handler. The SLL allocates functions to the SLA. It handles all safe functions of the network and has to support all functions to configure a SLN. Via the SLA it is possible to commission a SLN. To get information of non-SLNs, the SLA provides an interface to the LNS-tool (e.g. identification of binding connections of SLN and non-SLN).

Software architecture

Fig. 27 illustrates the system architecture of the SLL.
The SLL is a standard COM object and the implemented interface is fixed. For supporting other languages an IDL of the SLL has to be created. The processes will be implemented in the SafetyLon Library in the long term. Changes in the LNS ObjectServer must not influence the functionality of the SLL.
The SLL contains two interfaces and one application. The LNS API is used to handle the connection to the LNS ObjectServer. The SAFETYLON API is the interface for the SLA to the SLL. The handling of LNS Object Server is described in the Echelon guidelines of the LNS Application Developer's Kit . The SAFETYLON API is created and defined in this library.
The instance of the LNS Object Server will be created by the SLA. The SLA initializes the SLL and - with the SAFETYLON API - passes the LNS Object Server, LNS network and system object to the SLL. The Object Server is used as a local LNS client.

SAFETYLON Protocol Frame

As described further below, a SAFETYLON Protocol Frame includes the following parts:

Safety protocol frame composition and decomposition: the SAFETYLON protocol frame is used for several communication interactions between PC software and devices. Therefore, PC software is able to compose and decompose this protocol frame. This basic function is implemented in the SLL.

CRC calculations (all 8- and 16-Bit CRCs): if the SAFETYLON protocol frame is used, the CRCs are calculated by PC software. Therefore, PC software is able to calculate the different 8 and 16 bit CRCs to compose and verify data of the protocol frame. This basic function is implemented in the SLL.

Time stamp calculation: Time stamp calculation may be avoided. However, if required, this basic function is implemented in the SLL. Instead of time stamp a unique number could be used to verify that the data is current. This number could be generated by the device itself on request of PC software.

Time synchronization: if required, this basic function is implemented in the SLL.

SADR for PC application itself: the PC (software) itself needs a SADR. This SADR will be used to have a safe communication channel to the device. The PC's SADR will be transferred into the memory of both channels in the device and then can be verified by the device itself for safe management commands. This basic function is implemented in the SLL.

Device Management

The functions of the device management are responsible for automatic safe initialization of SLN information. In particular they are responsible to retrieve information of safe device identification, safe producer/consumer identification and safe binding identification of devices. Additionally, they are responsible for generating a safe unique SADR and a safe binding table.

Functions of the device management are listed as follows:

(Automatic) safe device identification (e.g. program ID, etc.): SAFETYLON devices have a specific range for the device class and device subclass of program ID.

Therefore, it is possible to identify SAFETYLON devices automatically by a PC software. This basic function is implemented in the SLL. Moreover there will be an identifier inside the device's application to identify the device type in a safe way. This is used to verify the correct application if a new application is loaded into the SAFETYLON device. This identifier is specified in the SDS. This basic function is implemented in the SLL.

(Automatic) safe producer/consumer identification (network variables): using user defined resource files or using standard resource files it is possible to identify all SAFETYLON network variables inside of a SAFETYLON device. It is very helpful for PC applications that this identification can be done by the SLL as it can be implemented generically.

(Automatic) safe unique SADR generation: The SADRs for the PC (software) itself, for the devices and for each SAFETYLON network variable is generated in a safe and unique way. The PC itself has a list of all already used SADRs and calculates new SADRs on that base. This list is a list for the software on that PC and must not correlate exactly to a specific LNS database even though devices in this LNS database will be provided with the data. This basic function is implemented in the SLL. In case of PC replacement or similar scenarios the list of already used SADRs is transferred to another PC. This is done in a safe way and together with the SAFETYLON LNS databases on that PC. This basic function is implemented in the SLL.)

(Automatic) safe binding identification: As stated above it is possible to identify the SAFETYLON network variables inside a device. Based on that fact it is also possible to identify the bindings between those network variables. This is very helpful for the applications using the SLL.

(Automatic) safe binding table generation: Because of having the possibility to identify the SAFETYLON network variables and the bindings between them and moreover having the knowledge of all SADRs it is possible to generate the binding tables for consumer network variables in a safe way. This basic function is implemented in the SLL.)

Address Management

Address management is used for safe verification and generation of unique SADRs. It guarantees that the SADR is unique in the whole network and supports safe reading, writing and monitoring of SADRs.

Functions of the address management are listed as follows:

Safe generation of SADRs: (see above)

Safe reading, writing and monitoring of SADRs: this will be done in a safe way by using regular mechanism of generating explicit messages and using the SAFETYLON protocol frame. To read and write SADRs appropriate commands are defined in the SDS.

SADRs verification (identification) and error management: the verification and error management is done by the SLL. A result of this process is then passed to the application software.

Binding Management

For binding of SLNs, safe consumer binding tables are generated. Also safe reading, writing and monitoring of these binding tables is preferred.

Functions of the binding management are listed as follows:

Safe generation of consumer binding tables (SADRs, Timing): see above. The timing parameters are set to default values (which are extracted out of the device's application) in the first step. The application afterwards adjusts this timing.
Safe reading, writing and monitoring of binding tables. (See above)
Binding verification and error management: see above. Error management of the SLL should give a reasonable result to the application.

Checksum calculations for SLN configuration data: when specifying SDS it is clarified if additional CRC or checksum calculations may be done when using the SAFETYLON protocol frame. If possible this should be avoided.

Application Download

Functions of the application download include:

CRC calculation including application binary file(s), NID, SADR, device type etc.:

when specifying SDS it is clarified if additional CRC or checksum calculations should be performed when using the SAFETYLON protocol frame. If possible this should be avoided.
Safe reading, writing and monitoring (block transfer/safe file transfer) and error management: block transfer is used for some specific operations. This differs from normal commands and is specified in detail in SDS.

Operating Modes

It is preferred to identify in which mode a SLN is set. Modes of an SLN are described further below.
Functions of the operating modes are listed as follows:

Monitoring of operating modes: operation modes can be monitored in an non-safe way. It is very helpful for the application to retrieve such information in a convenient way. Therefore the commands to read out the operational mode should be executed by the SLL and thereafter the result should be transferred to the application.

Run Mode confirmation. (For a specific installation scenario it is preferred to set the SLN to RUN mode. This will be supported by the SLL; the command to be specified in SDS.

File Operations

To manage the device system file (DSF; in this file information of the SLN is located like safety-related parameters, binding parameters, application, NID and SADR) it is preferred to implement functions to safe file storage of safe data.
Functions of the file operations are listed as follows:

Safe file storage of safe data (safe document files): it is recommended to avoid any confusion between old and current safety files inside the operational system.
Moreover, data should be safely read from and safely written to the files. This basic function is implemented in the SLL.
Safe file deleting of old versions: it is recommended to avoid any confusion between deleted and current safety files inside the operational system. Moreover, data should be safely read from and safely written to such files. This basic function is implemented in the SLL.
Safe directory management: it is preferred to avoid any confusion between deleted, old and current safety directories inside the operational system. Moreover, data should be safely read from and safely written to the files. This basic function is implemented in the SLL.
Safe file creating: it is preferred to create safely a new file of a SLN, if a file of the device doesn't exist or a SLN was added into the database. This basic function is implemented in the SLL.)

System Maintenance

If the SLN fails it is preferred to have a function, which can replace the faulty device by a new one. Functions of the system maintenance are listed as follows:

Replacement: Replacement of SLNs is supported by SLL .
Modification of SADRs, binding tables: any modification will set the SLN into test mode. Modifications are possible by using the SLL.

Application download: Application download is performed using the SAFETYLON protocol frame with block transfer. This basic function is implemented in the SLL.)

Tool (document file) version-control (device parameter). Version-control is used to verify if SLN is accessed by an "up-to-date" tool to avoid using a "clone" of a PC and therefore using old data. This basic function is implemented in the SLL.)

Diagnostics (non-safe)

The following functions can be done in non-safe mode.

Safe error log, history: for locating an error in the system it is required to read an error log out of the SLN.

Safe commissioning states: for verifying if a SLN has already been completely commissioned in safe way it is advantageous to get the information with every completed transaction or if anything is pending.

Operation mode: it is very helpful to be able to read the information in which operational mode the SLN is running.

(PC) application history log file: this is very helpful to see what activities have been performed with the PC.

Tool versioning

Device self test: the SLL controls the device self test. It gets information about the state of the device self test.

**Safety Related Data Format**

Safety Frame

A safety frame includes 2 sub frames. Both sub frames are nearly identical.

Identical information:

ID (FM, Version)
Address
Data
Non-identical information:
ID (Data Length)
Time stamp
CRC

Fig. 21 shows a data structure of the first sub frame. There can be 1 to 64 bytes of user data within the data area. If the number of net bytes (user data bytes) is between 1 and 8 a CRC-8 is used for error detection. If the number of net bytes is between 9 and 64 a CRC-16 is used.

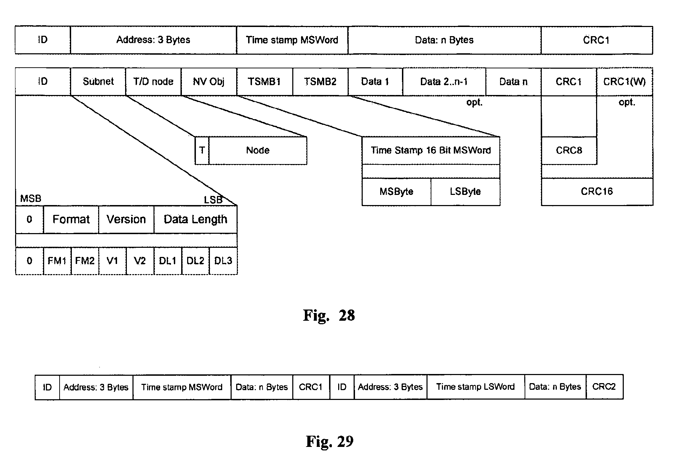

A total frame may be built with 2 subframes, as is, e.g., shown in Fig. 29.

Time stamp information has 32 bits. The most significant word is placed into the first subframe. The least significant word is located in the second subframe. A timing master sends the absolute time information (32 bit counter) to all connected devices. The timers (of the timing master and all devices) are incremented by 10 Milliseconds. The overrun time is longer than 1 year (about 500 days).

Addressing Model

The data transfer for exchange of safety related data information allows the transmission of data within small network structures (subnets) as well as within larger areas (global structures).

The addressing model uses safety related address information, which is located in each device. Normally, this address will be stored in flash memory. The safety related address information may be different from the "standard address" of the device. The safety related device is assigned its address by a specific procedure.

The principle of operation is the following: any device, which wants to transfer its data to another device, offers its address in conjunction with every message sent (producer). So the addressing model has a "source-addressing-structure". Any receiving device (consumer) maintains a look-up-table with a list of all valid producers. A message will only be accepted, if the consumer finds the address from the producer within its list.

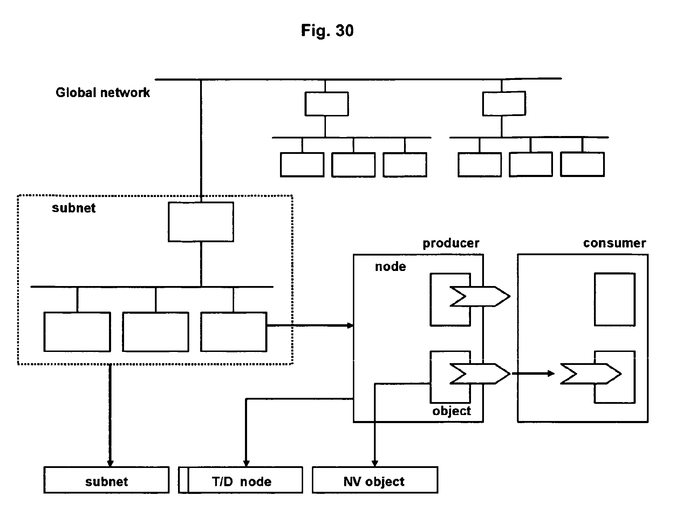

Fig. 30 shows an exemplary network structure for data transfer.

Time Stamp

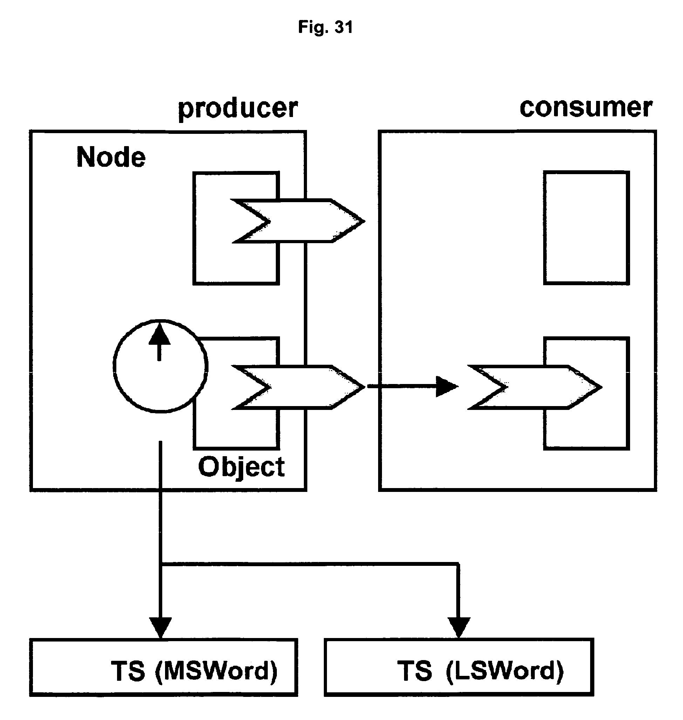

With any valid message the producer issues a new time stamp. This time stamp has 32 bits and has a global validity over the whole network. Fig. 31 illustrates a transfer between a producer and a consumer.

The consumer compares the time stamp of any new message with the internal timing information. If there is no discrepancy (both stamps match within a well-known period) the consumer accepts the time stamp. If the time stamp has not changed from the last message from the same producer, the consumer does not accept this as a new message.

Watchdog Function

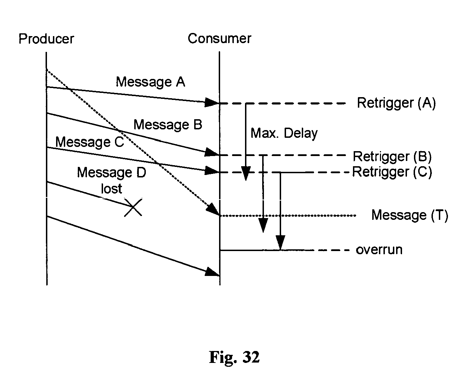

In order to avoid many systematic failures, a consumer uses an internal "Watchdog". For any communication object (any connected producer), a single watchdog may be used. The watchdog works like a "Retriggerable Monoflop". Fig. 32 illustrates operation of this function.

The producer sends its message with an actual time stamp. After receiving the message from the producer, the consumer checks whether the message fits to the following functions:

Both subframes fit to the CRCs
The comparison of ID, Address and Data will show no difference
The producer address is registered in the look-up-table
The data information is valid for this kind of message

The received time stamp is compared with the internal timer. If both timing information match (e.g. difference less than 1 sec.) the message will be accepted. By this acceptance the internal Watchdog will be retriggered (Message A).

With any new valid message the watchdog will always be retriggered (Message B, C). If there is an overrun of the watchdog (delay time elapsed), the consumer (or the safe application) must reach a safe state. This overrun can happen if one (or more than one) message(s) are lost (Message D).

Even if there will appear a message within a watchdog interval, which has an invalid time stamp, this message will not be accepted. In this case the watchdog will not be retriggered (Message T).

CRC

The error detection for each subframe is made by specific CRCs. The CRC from the first sub frame is not identical to the CRC of the second frame. The Fig. 30 shows the structure of a sub frame with the CRC. The data area contains also the safety address and the ID-information:

Safety frames, which are used to transfer 1 to 8 bytes, will be checked by an 8-bit-CRC. All larger frames (for transmission of 9 and more bytes) will be checked by a 16-bit-CRC. The selected CRCs are well known.

The CRC guarantees a Hamming distance of 4 up to a frame length of 2048 bits.

CRCs include the following additional features:

All errors with odd numbers will be detected (for the used data length)
All errors, which are located within an area of the CRCs length (8-or 16-bits), will be detected
The probability of error detection, which contain more errors than the guaranteed Hamming distance, will be less than ($\frac{1}{2}$) (r: exponent of the CRC-Polynomial, for 8-bit-CRC: 1/256, for 16-bit-CRC: 1/65536)

Time synchronization

Time synchronization is used to synchronize two or more devices for a common interpretation of time. This timing-information may include a 32-bit-time-stamp, which may be used to identify the actuality of a received message. The repetition rate for time synchronization depends on the drift of the oscillators in the devices and the worst-case reaction time.

Consumer / Producer Synchronization

For the communication between a producer and one or more consumers, a time synchronization is performed. For this kind of synchronization all producers which are connected to the same consumer have the same time information Therefore different consumers will not necessarily have the same time information.

Timing Master

In order to avoid too many different timing informations for different consumers, a timing master can be used. This timing master will send its timing information to all devices, which are connected by one safety application.

Synchronization Function

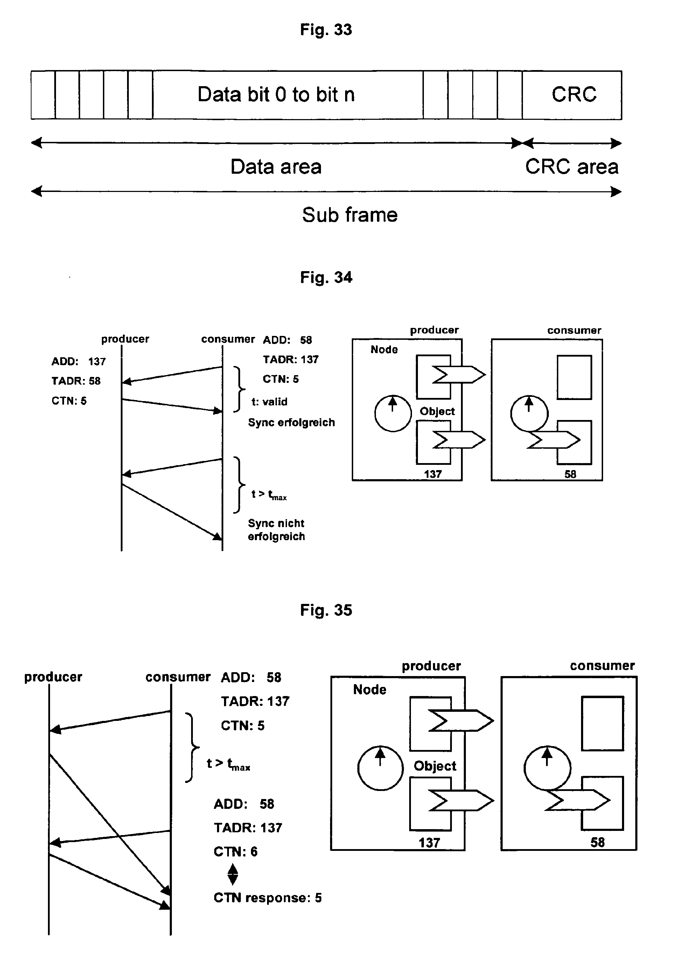

The time synchronization will be initiated by a consumer or the timing master. Fig. 34 shows a sequence for this procedure between 2 devices (producer and consumer).

Within the maximum synchronization time, the consumer or the timing master initiates a time request function.

| Address | Source address | From consumer or timing master (58 from Fig. 34) |
|---|---|---|
| Destination | Destination address of the device This information will need 3 bytes of data | Address of the device (137 from Fig. 34) |
| T / D | 1 | Data contains timing information |
| CTN | Consecutive timing number This information will need 1 byte of data | Number, which will be incremented by any timing request function |

After the consumer has sent its request message to the producer, the producer must respond to this request within a short period.

| Address | Source address | From consumer or timing master (137 from Fig. 34) |
|---|---|---|
| Destination | Destination address of the device. This information will need 3 bytes of data | Address of the device (58 from Fig. 34) |
| T / D | 1 | Data contains timing information |
| CTN | Consecutive timing number This information will need 1 byte of data | Number, which has been received from the request function |

A "Consecutive timing number" is necessary in order to identify the correct response to a request. Without having this information, an old response might be identified as the latest response message. This can be seen from Fig. 35.

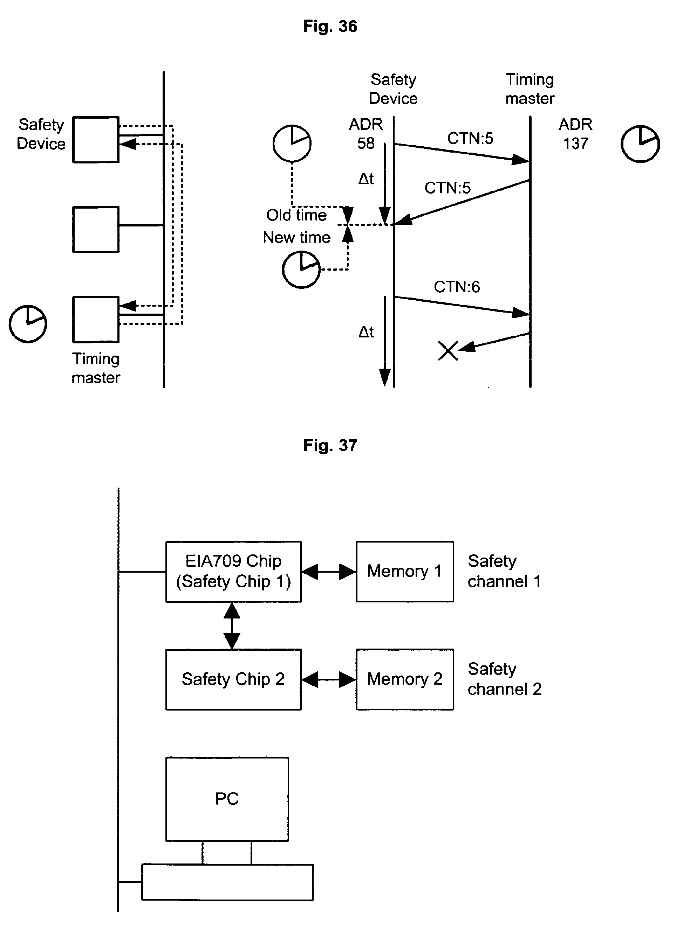

If a timing master will be used for synchronization, the safety related device is responsible for updating its own time. This is necessary because the timing master normally has no safety relevance. Therefore, any safety related device must request the timing master for the time within a certain period, which is defined for this specific application (T Sync). For availability reasons it is recommended to perform such request more the once within this time frame. Fig. 36 illustrates such a procedure.

A safety related device initiates a synchronization procedure by a synchronization request message, which will be sent to the timing master (Fig. 36). The timing master responses to this request by sending the new timer information to the safety related device. In order to distinguish this specific request/response-message from all other messages, the addresses and the consecutive number have to the transmitted. After receiving the response message the safety related device calculates the propagation delay between the request and the response. If the propagation delay is short enough, the new time is accepted and the internal clock of the safety related device is updated.

If the propagation delay is too high (second transfer from figure 9) or if there is no response to the message, the safety related device ignores the sequence and continues operation with the old timer.

Any malfunction of the timing master will be detected, because safety related devices communicate after synchronization. If the timing contains failures, the compared time stamps will show any discrepancies during data transfers.

Cyclic Data Transfer

The cyclic data transfer is the most common message. It is used to update the consumer with valid data from a producer. For maintaining the availability the cyclic data transfer has to be performed at least 3 times per reaction time interval. In order to identify any failure the consumer may check any received message by performing, e.g., the following functions:

Length information fits to the received number of bytes
Both subframes fit to the CRCs
The comparison of ID, Address and Data will show no difference (bit-by-bit-comparison)
The producer address is registered in the look-up-table
The data information is valid for this kind of message
The time stamp fits to the internal timing counter (within an allowed period)
The received time stamp is later than the last one

If a message doesn't fit to these functions, it will be ignored. A producer may use a new time stamp for a new message.

## Specification Safety related Addressing, Binding and Configuration

Abbreviations

| Abbreviation | Meaning |
|---|---|
| | |
| Consumer | Hardware I/O part or logically based part of a SLN which receives data from the network |
| CRC | Cyclic Redundancy Check |
| DSF | Device system file |
| EIA709 | EIA 709 and EIA 852 |
| Fault | Malfunction of a component or a system |
| HEDA | High end safety related device architecture |
| Input device | Device which gets data from a peripheral sensor |
| NID | Unique device identification (NEURON ID / EIA709 ID) |
| NMS | Network management software |
| Output device | Device which transfers its data to an actuator |
| PRM | Pre-run mode |
| PRDADR | SAFETYLON Address information of a producer |
| Producer | Hardware I/O part or logically based part of a SLN which transfers data to the network |
| RM | Run mode |
| SADR | SAFETYLON Address |
| Safe state | State there the defined fail safe situation is reached |
| SDA | Simple safety related Device Architecture |
| SIL | Safety Integrity Level |
| SLN | SAFETYLON Node |
| SLNADR | SAFETYLON Address information of a SLN |
| SLTS | SAFETYLON Time Server |
| TM | Test mode |
| TREQ | Time Synchronization Request |
| TRES | Time Synchronization Response |

As described above, different device architectures may fulfill the requirements of SIL 3. Preferred device architectures are given in the following:

"Simple" safety related device architecture (SDA)

Fig. 37 illustrates an exemplary embodiment of a "simple" safety related architecture of a SAFETYLON device with a programming tool (PC).

"High end" safety related device architecture (HEDA)

To achieve, as set forth above, higher performance/quality safety environments a 2-channel structure may be used. One channel can be built with an EIA709-chip or with a different microcontroller. Fig. 28 illustrates an exemplary embodiment of "high end" safety related device architecture of a SAFETYLON device.

Addressing Model

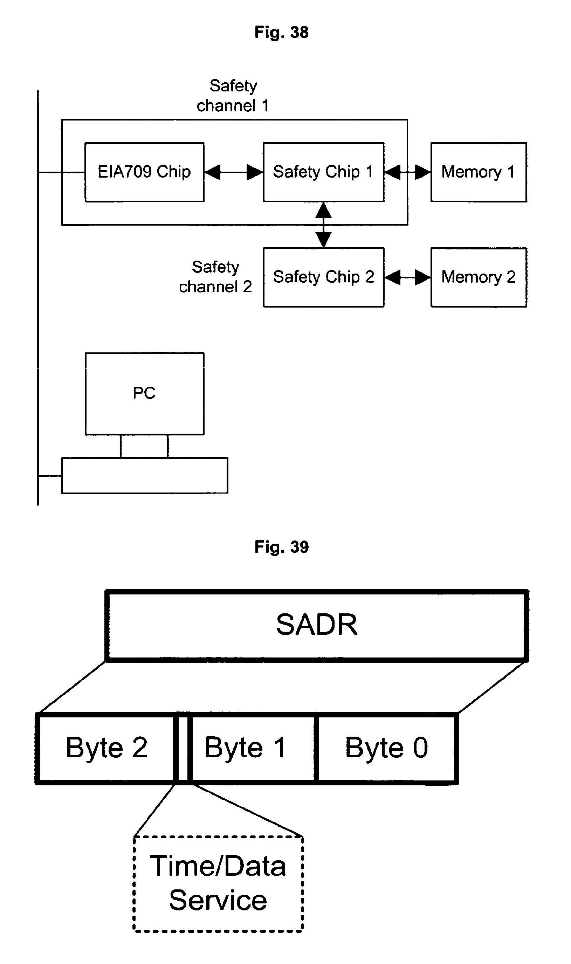

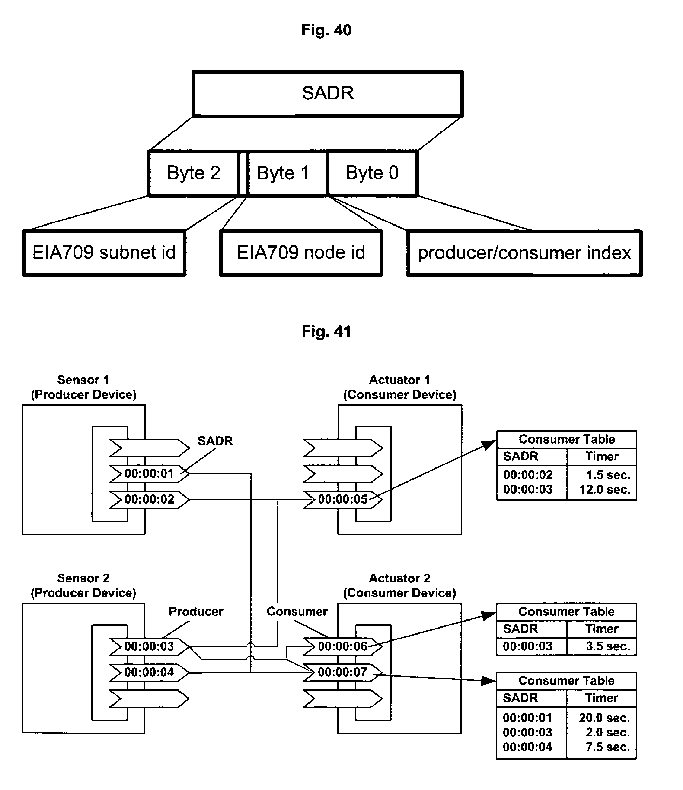

A SADR may have, e.g., 23 bits and can be used to uniquely address a SLN or a producer or consumer inside a SLN. In general, a structure of a SADR may be defined, as long as each SLN, producer or consumer may be clearly identified in a network. An exemplary SADR structure is shown in Fig. 39, while an embodiment of a preferred addressing model for a network is shown in Fig. 40.

The SADR is used to uniquely identify a producer or consumer inside a SLN. That means each producer inside a SLN transmits the SAFETYLON message with its own address (source address) to a consumer. The SADR is stored inside the SLN once for each producer in the memory (typically FLASH memory) of each of two safety channels of the SLN. Each consumer has its own table, which consists of the SADR and a timing parameter (timing expectation) for each SADR at which the consumer expects a safety message. This table can have an unrestricted size and may hold the information of several SADRs and hence of several producers. For request/response service each connected consumer has its own SADR. As an example the request/response service is required for time synchronization processes. An exemplary scenario for such an addressing model is illustrated in Fig. 41.

SAFETYLON Life Cycle Model

SAFETYLON supports an application during several phases of its life cycle concerning IEC 61508 . Safety-related communication is only one part of a complete safety concept comprizing machinery, building automation and entire plants. Other safety related parts of machinery are, however, considered as well. For example, the calculation of residual error probability may be performed for the whole system without limitation to components and parts of the system. In the following, safety-related communication with SAFETYLON will be explained in further detail.

Concept, Planning and Implementation

Application Layout

For designing an application layout, many characteristics of SAFETYLON must be taken into account. For example, possibilities and restrictions concerning

Separation and Protection of SAFETYLON Domains
SAFETYLON Addresses
Single Installation PC

must be observed.

Coding and Compilation

Coding and Compilation can be done using regular, not safety related tools. The safety functions are coded by use of an editor. After finishing the coding, a specific, application-related application binary file is generated by compilation. In addition, a safety-related system application file will be combined with the specific application file. A resulting system application file includes, e.g., safety-related routines for internal tests, communication between the controllers, timers, etc.

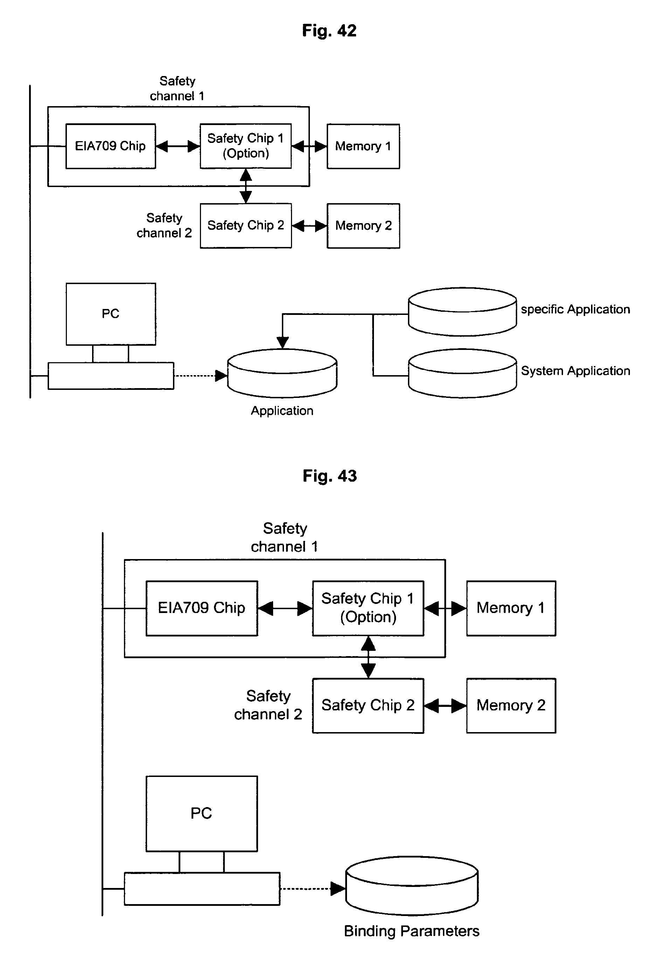

As shown in Fig. 42, an actual application may include a specific application file and a system application file, which may be connected (linked).

<u>Binding</u>

In general, binding parameters consist of two parts: standard/regular binding parameters according to the regular network standard (EIA-709 binding parameters) and SAFETYLON binding parameters.

<u>Standard/regular binding parameter (e.g. EIA-709 binding parameters)</u>

Standard/regular binding parameters (e.g. EIA-709 binding parameters) usually are independent of and without actual report on SAFETYLON. A binding table is built, e.g., by using ordinary network management software (NMS).
If an SLN is already commissioned by the NMS and this software is working in connection to the network, modification of these binding parameters will be transmitted by the NMS software via ordinary access.

<u>SAFETYLON Binding Parameters</u>

SAFETYLON binding parameters are defined as a parameter table for each consumer. The content of this table includes expected SADRs of connected producers and the time expectations for receiving messages.
As shown in Fig. 43, SAFETYLON binding parameters may be generated by PC. Generation of data takes into account binding regular/standard schemes of the network (e.g. EIA-709 network), SADRs of producers and time expectations.

<u>Addressing</u>

<u>Address of SAFETYLON devices</u>

The SLN has a NID and a SADR. Both addresses are used to directly address the SLN itself while the NID is a non-safe and the SADR is a safe address.
The NID is a unique identifier, which resides in a standard device chip (e.g. an EIA709 chip) and is stored in the chip production process. The NID cannot be overwritten. Using the NMS, the NID is also stored (e.g. on the PC). While identification and transfer take place, a stored NID will be verified.
After completion of the identification process the NID will be verified and the SADR for the SLN will be generated. Moreover, the file storage the address information will be generated afterwards..

<u>Address of Producers and Consumers</u>

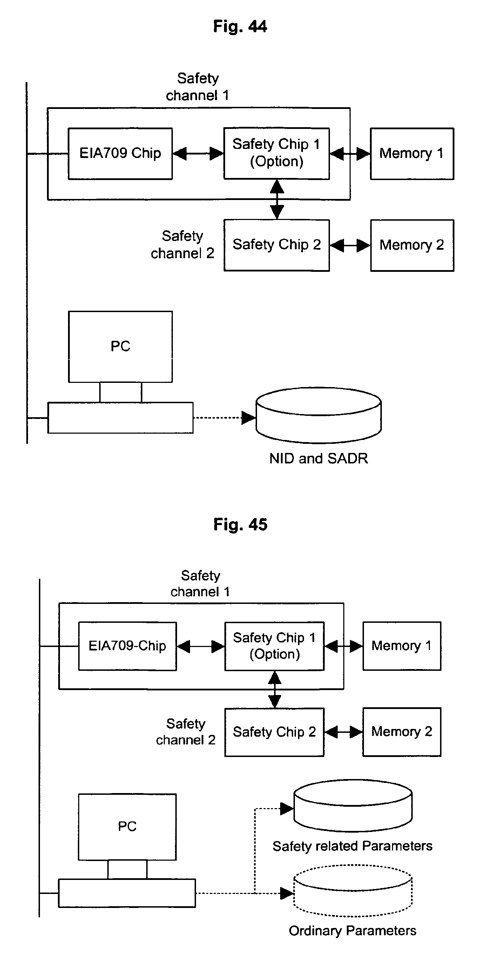

Each producer and consumer has its own unique SADR. This address information will be redundantly stored in the (FLASH) memory of both safety channels. An SADR will be transferred to a producer or a consumer by the use of the SADR of the SLN together with a CRC. Then, both safety channels also check if the received SADR for the producer or consumer is unique for the SLN. Please see Fig. 44.

<u>Address Table of Consumers for expected Producers</u>

Each consumer has its own table of expected SADRs. Such information is called SAFETYLON binding information and is transferred by the use of the SADR of the SLN.

<u>Application Parameters</u>

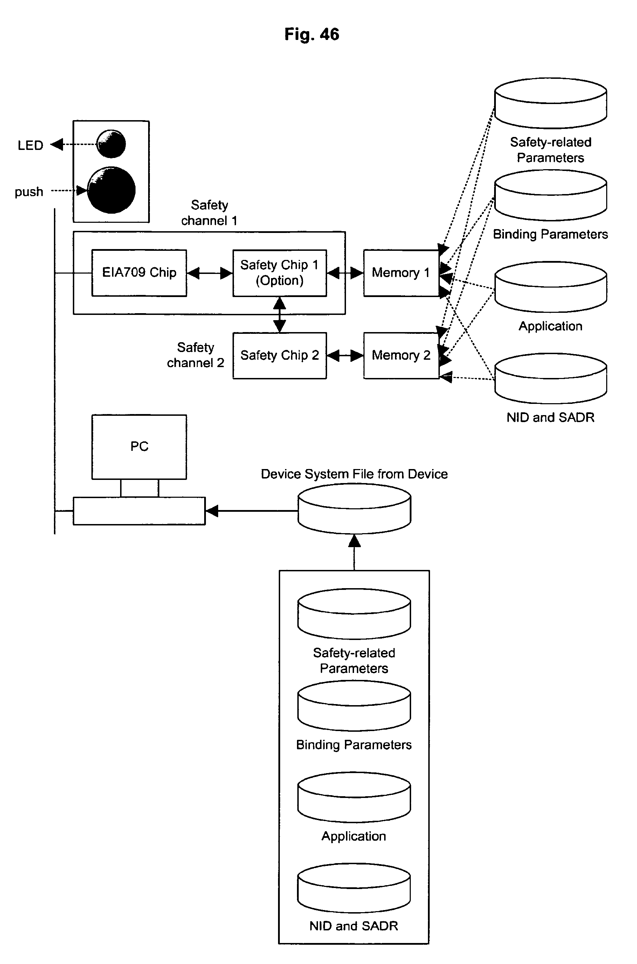

SLN's application is prepared to hold safety related parameters for address and timing information. This information is related to producers that are bound to a consumer. Moreover, SLN's application may be adjusted by some safety related application parameters. Also, SLN's application may be adjusted by some non safety related parameters. See Fig. 45.

<u>Commissioning</u>

Commissioning may be basically separated into 4 main steps:

Identification with Addressing

Transferring the Application and Verification
Transferring the Binding Parameters and Verification
Transferring the Application Parameters and Verification

Identification with Addressing and Verification

Identification of an SLN is done by using the respective NID. The NMS stores the NID in a database. This information is sent together with the SADRs to the SLN. After receipt, the SLN verifies the received NID with the present chip's NID. If the received NID and the present NID are the same, this match is indicated (e.g. visually, by a flashing LED; audibly by a sound). In response, it is considered to confirm the displayed match, e.g., by an operator pushing a safe identification push button at the front of the SLN. Then, the device stores the SADRs into both memories (i.e. in both channels) in a non-volatile memory (e.g. Flash memory). During the storage operation the data is checked and the CRC is verified in order to detect any failure from transfer or from the storage function. After identification and verification, the stored SADR is used to safely address the SLN or a producer or consumer inside the SLN. See Fig. 46.

Transferring the Application and Verification

Different device architectures may be used and may result in different transfer and verification processes of the application of safety channel 1, e.g., depending on a current device architecture. Transfer and verification of the application of safety channel 2 is, however, independent of architecture. Transfer of an application may use a password or another appropriate securing mechanism. During the transfer of the application, the SLN is in a safe state or transits thereto. All application files have their own CRC. During the storage operation, the data is checked and the CRC is verified by the SLN. So, any failure from transfer or from a storage function will be detected.

Safety Channel 1: Device with SDA

With the use of standard firmware of, e.g., an EIA709 chip, standard transfer for an application is used. In this case, transfer and verification may include:

Transferring the application into the regular/standard chip (e.g. EIA709 chip)
Transferring the SADR of the SLN and CRC for application to both channels

Safety Channel 1: Device with HEDA

The safety chip 1 has a boot loader. With a boot loader, the SLN may receive a new application with included address information (SADR of the SLN) and CRC in one step.

Safety Channel 2

The safety chip 2 has a boot loader. With a boot loader, the SLN may receive a new application with included address information (SADR of the SLN) and CRC in one step.

Transferring SAFETYLON Binding Parameters and Verification thereof

SAFETYLON binding parameters include producer address information (SADR) and timing parameters to give the consumer the possibility to verify the correctness of received data frames.
Transfer of SAFETYLON binding parameters may use a password or another appropriate securing mechanism.
With SAFETYLON binding parameters, the SADR of the consumer and a CRC are transferred to the SLN (e.g. from the PC). During the storage operation the data is checked and the CRC is verified by the SLN. Therefore, any failure from transfer or from a storage function will be detected.

Producer Address Information

The SADR of each connected producer is written into the table of the consumer (see also Fig. 41). Only messages from registered producers are accepted by the consumer.

Timing Parameters

Timing parameters include time expectation information for producers to give the consumer the possibility to verify the correct existence and correct timing of connected producers.

The following table represents an exemplary look-up table of registered producers belonging to the same consumer.

| SADR | maximum reaction time | elapsed time |
|------|----------------------|--------------|
| 01:02:03 | 100 ms | 23 ms |
| 03:04:05 | 1000 ms | 378 ms |

Each time a valid SAFETYLON protocol frame is received by the consumer from an expected producer the elapsed time counter is set to 0. If the value of the elapsed time counter will be higher than the maximum reaction time the SLN will reach the safe state.

The consumer maximum reaction time is part of the application file itself and must not be overwritten. The application takes care that this consumer maximum reaction time will always be the maximum reaction time of a single producer if the entry in the corresponding look-up table is higher than the consumer maximum reaction time. However, the maximum reaction time for a single producer can be lower than the consumer maximum reaction time and therefore this parameter in the look-up table can be overwritten (e.g. by a PC tool).

Transferring the Application Parameters and Verification

Application parameters include safety-related and ordinary parameters.

Transfer of the application parameters may use a password or another appropriate securing mechanism.

With safety-related application parameters, the SADR of the device and a CRC is transferred to the SLN from the PC. During the storage operation, the data is checked and the CRC is verified by the SLN. So any failure from transfer or from storage function will be detected.

While each modification of the safety related parameters will cause the SLN to go into "test mode" and so the SLN always functions in a safe manner.

Comparison

Comparison by a PC

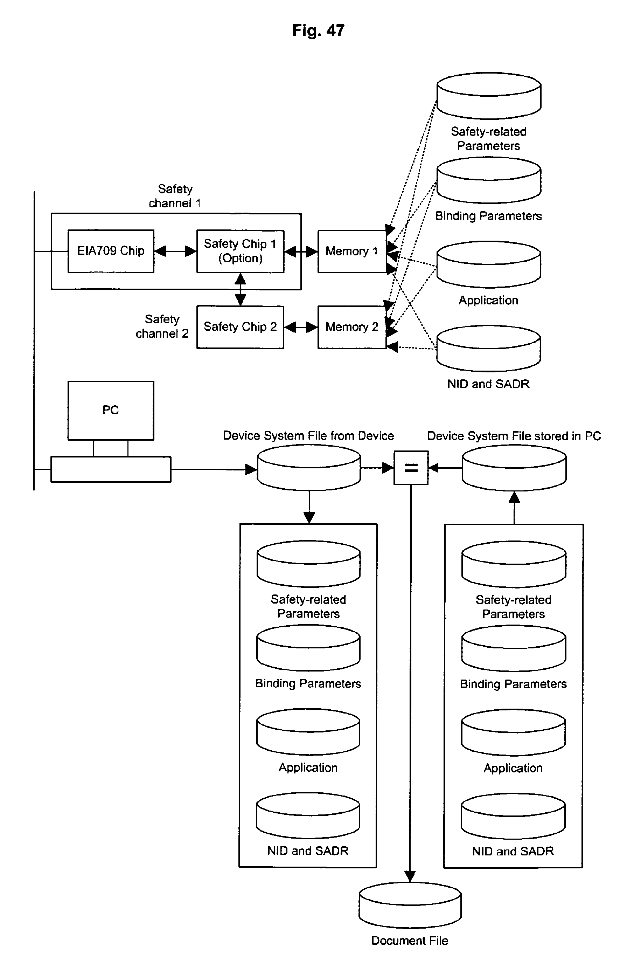

Data (address, application, binding, etc.) in the SLN is called "device system file" (DSF). After the DSF has been verified by the SLN, the DSF is accessed in a diversitive way and uploaded to a PC to create a valid document file. Once uploaded, the DSF is compared with the already existing DSF on the PC. If the verification shows no differences a valid document file is produced like shown in Fig. 47.

Comparison by a user

After comparison by PC indicating a valid result, a user may confirm manually, e.g., the following data:

SADR

Application identification information
Binding parameters
Application parameters

Test and Operation

Operation Modes

Four different operation modes for a SLN are valid: idle mode (IM), test mode (TM), pre-run mode (PRM) and run mode (RM).

Idle mode (IM)

After production and before the DSF is compared, the SLN runs in IM. In this mode, the SLN does not communicate and does not start to operate. In IM, safe outputs of the SLN are in the safe state.

Test Mode

After the DSF is compared during installation the SLN is in TM. In this mode the SLN does not communicate and does not start to operate. To test this function of the SLN, a function test may be initiated (e.g. by a PC).

Pre-Run Mode (PRM)

In PRM the SLN is able to operate and to communicate. In contrast to RM (see below), the SLN indicates its operation in PRM, e.g., by a warning signal (e.g. yellow LED is blinking and no green light) to inform an operator about PRM. To enter this mode, the SLN receives confirmation that TM was successful.

Wait Mode (WM)

In WM, the SLN waits for a confirmation or command, e.g., from a PC tool to get into RM. WM my be used if the system design is based on, e.g., a coordinated start-up procedure that does not allow to switch over all SLNs synchronously by a reset.

Run Mode (RM)

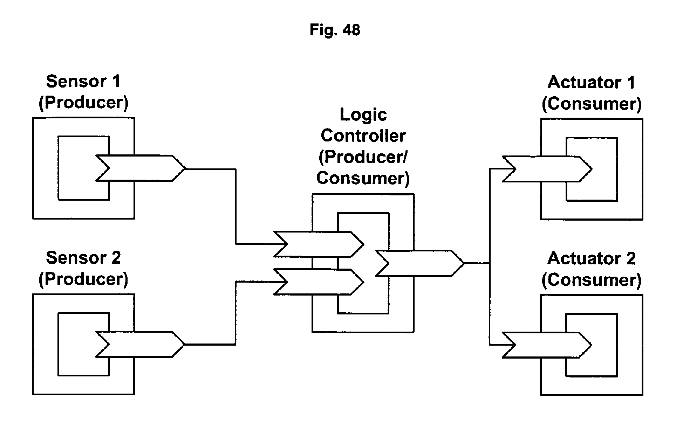

In RM, the SLN is able to operate and to communicate. Before RM, the SLN was in PRM first. There are two options to get into RM: after (power-up) reset or after explicitly enabling by command (e.g. from a PC).
To enter RM after a reset, the SLNs will directly switch over from PRM to RM. To get the SLNs more coordinated into RM, the SLNs will switch over from PRM to WM after reset.
Then the SLNs will be switched from WM to RM in a coordinated fashion (e.g. by PC software). Fig. 48 shows a system design, which requires a coordinated installation scenario.
As illustrated, producers "Sensor 1" and "Sensor 2" are switched from WM to RM. Then, the logic controller of combined consumer and producer SLN will be switched from WM to RM. Finally, the consumer SLNs "Actuator 1" and "Actuator 2" will be switched from WM to RM.
If a SLN performs a reset (e.g. at power-up) and the SLN has been in RM before, the SLN will reach the RM again.

Safe State Mode (SSM)

SSM will be reached after an error has been detected while a SLN was in RM. When the SLN is in SSM, it may recover by itself to RM if the error was caused by non-availability of communication. In case of other reasons like hardware, CPU, memory or safety configuration failure, a SLN does not reset itself automatically to RM. In these cases, it is preferred to set the SLN into IM and continue with TM and so on. If there is a non-recoverable error in a SLN, the SLN should be replaced.

Modification Mode (MM)

MM will be reached after a modification of data has been initiated from an external source, e.g. over the network. Modification of data may be done while transferring the application, the binding or application parameters. While the SLN is in MM, it behaves like in IM. Therefore, in MM the SLN does not communicate with other SLNs and does not start to operate. When modification has been finished, the new DSF is compared and - if the verification is successful - the SLN enters into TM. Then, a new test may be carried out.

State Diagram

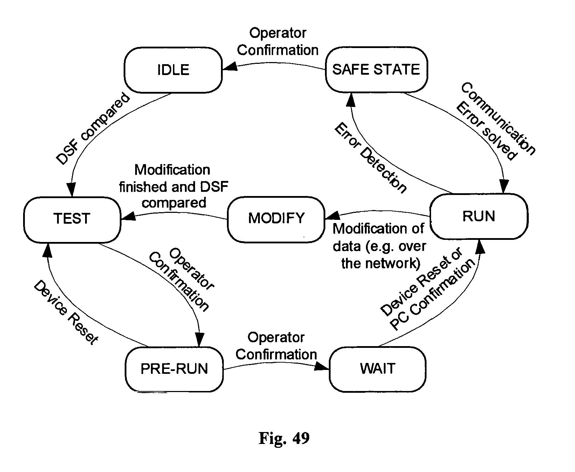

Fig. 49 illustrates the above described states.

<u>Test</u>

Files, which are stored into the SLN, may be produced by a non safety related tool. Only the NID may be regularly verified, as described above.

Following, programmed functions may be tested to ensure that the SLN operates according to its programmed functions:

Safety address: This can be done by starting the application and finding out the connected devices and the operations. Safety programs, binding parameters and safety-related application parameters: This can be done by testing all functions. Here not only the operations but also the timing may be checked.

If addresses and safety functions are checked and positively confirmed, the SLN is informed (by, e.g., pushing a button) that everything has been tested. This sets the mode for the SLN from TM to PRM.

<u>Repetitive system structures</u>

Repetitive system structures in a network may include:

Repetitive logically isolated system applications
Identical device hardware
Identical structure of devices and logical bindings
Identical device applications
Identical values for parameters (safety-related parameters and binding parameters)

In case of modification of a SLN, it should be tested completely. However, if the same modification has been done for all the same repetitive system structures in the network, it is allowed to perform tests once for the modification in a specific repetitive system structure to avoid the complete test of all identical repetitive system structures in the network. Instead of a complete test of all SLNs, in these repetitive system structures it is allowed to test on a sample basis.

<u>Transfer of safety related data</u>

In operation, safety related data transfer is handled by SAFETYLON. The underlying network is responsible for the data transport between the nodes within a defined timing quality. Loss of timing or transport quality within a communication layer is detected by the SAFETYLON layer and will result in loss of availability but not in loss of safety.

<u>Time synchronization</u>

<u>Consumer / producer synchronization</u>

From time to time each consumer asks the connected producer for its time. By comparison of the own time and the time information from any transfer received from a producer, the consumer will be able to check the topicality of the received data.
The network performance verification is a sequence within data transfer. A SLN sends by its consumer a "Time Synchronization Request" message (TREQ) to the connected producer. After receiving the TREQ message, the SLN of the producer sends its data with an additional code, which enables the SLN of the consumer to identify this message as a "Time Synchronization Response" (TRES). By measuring the time delay between the TREQ and the TRES feedback, the consumer is able to check whether the network is fast enough.

<u>Timing Master</u>

From time to time, each SLN asks the SAFETYLON time server (SLTS) for the relative time. By comparing the relative time, the elapsed time and the time information from message transfer, the consumer will be able to check the topicality of the received data.
The network performance verification is a sequence within data transfer. A SLN sends a "Time Synchronization Request" message (TREQ) to the connected SLTS. After receiving the TREQ message, the SLTS sends its data with an additional code, which enables the SLN to identify this message as a "Time Synchronization Response" (TRES). By measuring the time delay between the TREQ and the TRES feedback, the consumer or producer is able to check whether the network is fast enough.

The SLTS can be built as a separate device or can be integrated into a SLN.

This preferred embodiment has a single SLTS for a self contained system application. A self contained system application has no safe communication connection to other parts in the network. There may by several SLTS in the SAFETYLON network.

Heartbeat

Each consumer has a specified time expectation for the data messages of each connected producer. Therefore a producer has to send messages by using the protocol frame as described above at least in a frequency corresponding to the expected response period of the consumer or more frequently. If a producer misses to update the messages as expected the consumer will reach the safe state.

Startup after power up or reset

If a SLN is in TM, the SLN will not operate after power up or reset. In RM, the SLN immediately starts to operate after power up or reset.

Recover from network failure

Due to a network failure, affected SLNs will not or hardly by able to send or receive messages from other SLNs. Since affected consumer SLNs will get no further data from other SLNs, these consumer SLNs will enter SSM.

There are two preferred ways to get those SLNs that are in SSM to the RM. If an error was caused by communication inavailability, a SLN may return itself to RM immediately after the communication is stable again. If this is not the case, the SLN will stay in safe state and will enter RM again, step by step as described above,.

Maintenance terms

Diagnostic information

Diagnostic information will be gathered and stored by the SLN. This information is readable by the non safety related application for visualization.

Replace safety related devices

If a SLN has a fault, a new SLN can replace the old one. Fig. 15 illustrates a preferred process for device replacement.

The new SLN has a new NID. If the old (defective) SLN is replaced by a new one (NID: 06:05:04:03:02:01) the old DSF is loaded into the new SLN. Because the SLN checks the stored NID, the SLN will not agree to the new DSF. The SLN indicates such failure, e.g., by an LED. Agreement to device replacement will be indicated, e.g., by a user manually providing respective information (e.g. by pressing a push button).

Then, the SLN checks whether all device information from the DSF will fit to the SLN (e.g. number of inputs, application, firmware version, serial number). If the check is done with a positive result, the SLN will create a new DSF with a new NID, the identical SADRs of the SLN and each producer and consumer. A new DSF CRC is also calculated. This new DSF will be transferred to the PC, will be verified by the PC and will be stored as a new document file.

Modification

In case of replacement, a process as described in the previous section is carried out. After modification processes as described with respect to commissioning, comparison and test operations will be performed.

Document files of all SNs in the system can be used to more efficiently verify the functionality of the safety system. Document files represent a tested and verified status of the safe network. After modifications, they can be used to verify the differences between the states before and after the modification.

If verification succeeds, the SLN does not have to be tested again. If verification of a SLN fails, this SLN is tested (again).

Machine part changing

Changeable machine parts may be tested at least once according to a procedure described above with respect to testing. After changing of machine parts no further steps are required. Open input situations due to missing producers after machine part changes may be handled by the SLN's application.

**Software Architecture Document For Safety Chip Software**

<u>Definitions, Acronyms, and Abbreviations</u>

| | |
|---|---|
| API | Application Programming Interface |
| CRC | Cyclic redundancy check |
| CSJN | Current subjob number |
| CTS | Current time stamp |
| GT | Gap time: Time from the beginning of a subjob until the beginning of the next subjob (both jobs belong to the same cycle). |
| ISR | Interrupt service routine |
| JSTS | Job start time stamp |
| LON | Local operating network |
| LSJTS | Last subjob time stamp |
| MRT | Mandatory repetition time: Within this time a designated job must be finished. |
| NRSJ | Number of subjobs |
| NV | Network variable |
| SNV | Safe Network variable |
| SC | Safety chip |
| SCOS | Safety Chip Orion Stack |
| ST | Software timer |
| TSJ | Execution time of a subjob |

<u>Architectural Representation</u>

A logical architecture of safety chip software shown in the logical view is organized in layers and layers consist of one or more modules. Modules include functions that are only used within the module or are interfaces to other modules.

<u>Architectural goals and constraints</u>

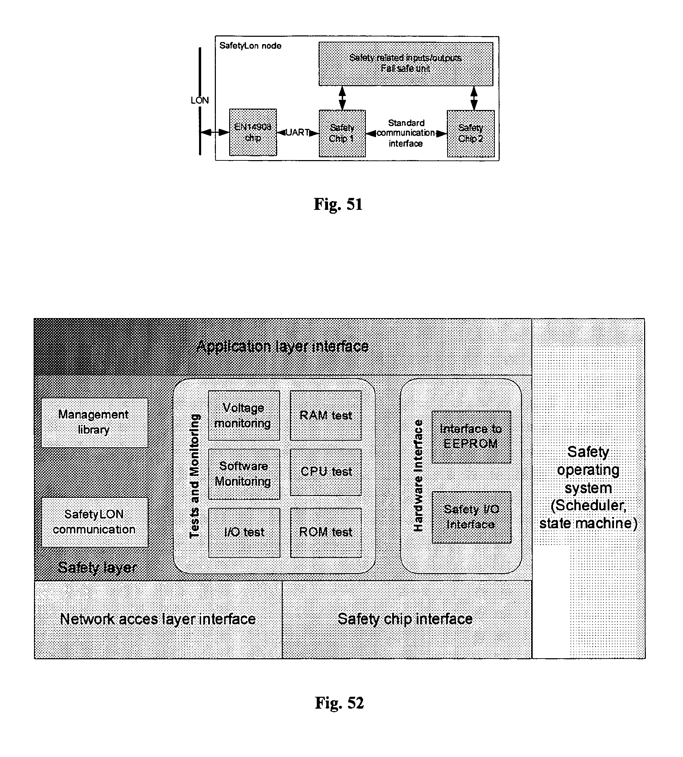

To make (e.g. EN 14908) networks safe, the present invention adds hardware (2 safety chips) to a node and program safety software for the safety chips. Accessing the network, however, is done by using standards (e.g. EN 14908) chips (see Fig. 51).
The network can be accessed with, e.g., a Neuron chip from Echelon or a LC3020 chip from Loytec.
Since safety modules are intended to work with different platforms (e.g. Echelon, Loytec chips), an adaptation layer is used that includes platform specific details and hides them from the safety modules. As shown in Fig. 52, safety chip 1 is connected to the EN 14908 chip. Therefore, only safety chip 1 has an adaptation layer. Software architecture, preferably is as similar as possible on both safety chips due to, e.g., maintenance reasons.

<u>Logical view</u>

SAFETYLON software modules are designed in a way that its implementation (size of source code, size of runtime image) meets resource requirements and has a three layered software architecture (Fig. 52).
Application layer interface offers safe services to the application. The safety layer provides services to fulfill safety requirements. Network access layer interface provides access to the standard (e.g. EN14908) network. The safety chip interface handles all communication between the safety chips.
The safety operating system (SOS) is used for, e.g., scheduling jobs, i.e. executing of software modules on a periodic schedule and may incorporate a state machine.

<u>Safety operating system</u>

The safety operating system includes two submodules, a state machine and a scheduler.

State machine

A SAFETYLON node can be in one of seven different states. After the startup procedure, the node is in IDLE state. The node is ready for working if it is in RUN state. In case of a malfunction, a SAFE state is reached. To modify data on the node such as adding a safe node address to the producer/consumer table the node is in MODIFY state.

Changes of state are preferably performed as illustrated in Fig. 49. A switch from one to another state is triggered by the state machine.

Start-up procedure

Before any function of the safety chip software is executed, the processor is started.

Therefore, following tasks may be performed:

Interrupt and exception vectors are configured.
Reset controller is configured.
Embedded memory (e.g. FLASH) controller is configured.
Watchdog timer is set up.
Power management controller (controlling, e.g., main oscillator and PLL) is

initialized.

Further, following measures for hardware initialization may be carried out.

System timer is initialized
Hardware I/Os connected to safe I/Os are initialized (e.g. to set safe outputs into a safe state)
Other I/O (non-safe) pins are configured
Safety chip interface is initialized
Memory (e.g. EEPROM) interface is configured
Voltage monitoring is initialized
Network access layer with its underlying driver is initialized

Test of the flash (ROM) storage.

Test of RAM functions (functions which are transferred from the ROM into the RAM in order to minimize execution time) by comparing the RAM contents to the appropriate ROM contents (which are secured by CRC and tested in the previous step).
Full CPU test including ALU test, stack test, flag test, barrel shifter and multiplier test.
Full CPU register test following the GALPAT (galloping pattern) method.
Start of the I/O test pulses - a full I/O test requires a working scheduler, therefore the test for the I/Os is only initialized.

After performing, inter alia, storage testing (e. g. FLASH, ROM), and startup time synchronization, the system is able to operate. It starts the scheduler and state machine and enters, from a logical point of view, IS.

Scheduler

The scheduler starts different jobs. For example, it starts scheduling after a start-up procedure has been performed successfully. Every time a job or, if a job is separated into more subjobs of same duration, a subjob has been executed, the state machine takes over control and reacts according to the return value of the function of subjobs.

A job may be identified by
the time, it has to be started again (mandatory repetition time),
the time, the next subjob of a job must be started (gap time),
the number of subjobs belonging to a single job,
the execution time of a subjob.

The scheduling policy is called earliest-deadline-first-scheduling. This scheduling policy uses a dynamic priority management system. The process priorities are changed according to their deadlines (latest time when the process has to be completed). The process with the nearest deadline gets the highest priority. Three additional parameters for each job may be stored, namely time when a job starts, time when a subjob starts, number of subjobs left to be called.

Parameters mentioned above are stored in a static look-up table that may be accessed by the scheduler. By scheduling jobs with the earliest-deadline-first-scheduling policy it is possible that the execution of a subjob can be delayed if the "select" requirement returns the same value for two subjobs. To ensure that the jobs can still be finished within their mandatory repetition time, a safety overhead is used. For example, a job may be finished within a maximum of about 80% of the mandatory repetition time, i.e. safety overhead of 20%. To avoid that a single job does not block the systems, a watchdog may be used. It is initialized with an execution time plus a safety overhead. The watchdog stops the job if it takes longer than the specified execution time.

Application layer interface

The application layer interface comprises functions that form an API for the application programmer.
In addition, a submodule may store a network variable table and definitions of network variables used in a configuration developed by an application programmer.

SAFETYLON communication

The SAFETYLON communication module provides, inter alia, the following functionalities:

Formatting messages according to safe message format specification
Sending and receiving SAFETYLON messages, e.g., network management and application messages
Sending heartbeats (safe messages) periodically
Synchronizing time between different nodes (inter time synchronization)
Access to a database where safe addresses and related data is stored
Recognition and signaling of failures resulting from communication

Safe data communication

The section covers the requirements.
Every safe message uses the frame format describe above. This structure provides mechanisms for redundant transmission of all information and failure detection using CRC checksums.
Functions for building and validating SAFETYLON messages are provided, offering, e.g., the following features:

Calculate and check CRC checksums
Build header and check header information for validity
Get safe address from producer database and check if source address is a valid producer
Compare data bit for bit
Get network time and check if timestamp of network time is valid

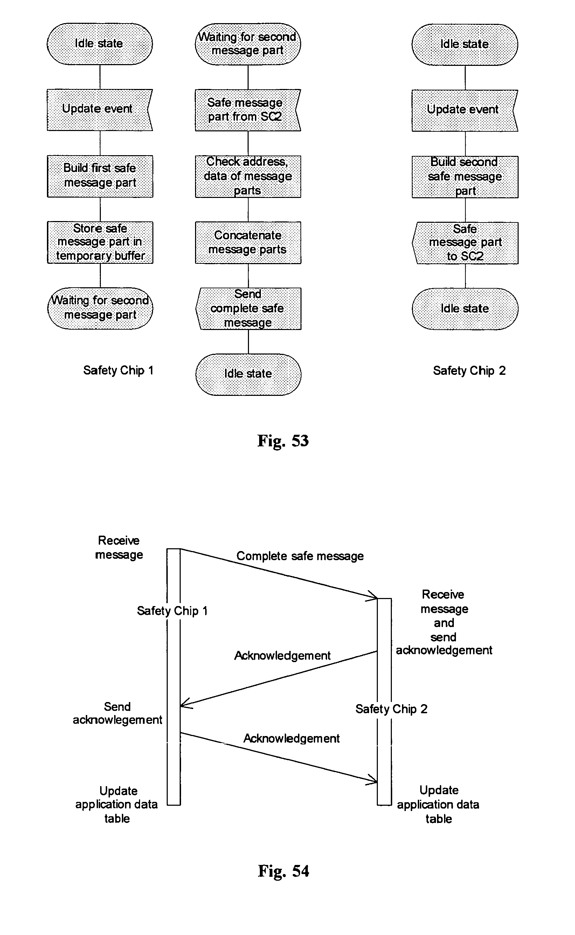

Sending a safe application message is performed in close cooperation with the safety chips. Fig. 53 shows the steps of the sending routine on every safety chip. On safety chip 2, the second part of a safe application message is built whereas on safety chip 1 the first part is constructed. In the next step, the message parts are concatenated and sent via functions of the network access layer interface. Hence safety chip 1 incorporates a single state, while safety chip 2 incorporates two states.
Receiving a safe application message is performed in close cooperation with the safety chips. Fig. 54 illustrates steps of a receiving workflow on a SAFETYLON node:

Safety chip 1 forwards the complete safe message to safety chip 2 and processes the message.
Safety chip 2 receives and processes the message and sends an acknowledgement (event: processing successful or failed). Safety chip 1 checks the acknowledgment coming from safety chip 2 with its event after processing the message and sends an acknowledgement to safety chip 2. Safety chip 1 updates application data the next time the SAFETYLON communication module is called and safety chip 2 after it has received the acknowledgement from the other safety chip.

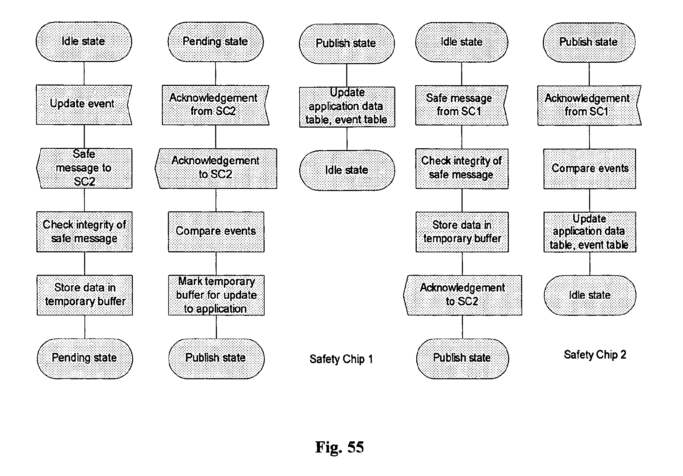

Due to the aforementioned sequence of processing a safe application message, the SAFETYLON communication module includes a state machine with 3 states for processing each safe message on safety chip 1 and a state machine with 2 states for treating every safe message on safety chip 2 (see Fig. 55).
The software module is called simultaneously on both safety chips by the scheduler. The application data are updated at the same time on both safety chips. Safety chip 1 starts with the safe message processing sequence (Fig. 54) and therefore finishes earlier than safety chip 2. For that reason, a third state is included in the software of safety chip 1 to update application data at the same time.
Safety chip 1 is in IDLE state as long as no new message has arrived. In case a new safe application message is received, it sends the safe application message to safety chip 2, processes the message and switches to state PENDING. As soon as an acknowledgement of safety chip 2 has been received, it sends an acknowledgement to the other safety chip, processes the event and goes into PUBLISH state. The next time the software module is called, application data is updated and state is changed to IDLE again. For the details see Fig. 55.

Safety chip 2 is in IDLE state as long as no new message has been received from safety chip 1. In case a new safe application message was obtained, it processes the message, sends an acknowledgement to safety chip 1 and goes into PUBLISH state. After receiving the acknowledgement from the other safety chip, application data is updated and state is changed to IDLE again. For the details see Fig. 55.

Producer and consumer table

Software of a safety chip includes a database that stores safe addresses of each logical connection. Additionally, timestamps to each logical connection may be stored. They are used to recognize communication failures (e.g. cycling messages). On consumer (receiver) side, a timestamp is stored in the database every time a new valid message arrives; on producer side (sender) every time a new valid message has been sent. A message will be accepted by a consumer if its producer is listed in the database. Producers only send messages to consumers listed in the database.

Heartbeat watchdog

Producers send messages periodically every time the watchdog is triggered. Such messages are called heartbeats. On consumer side the timestamp is periodically checked and if it is older than a distinct delay (= the watchdog is triggered) the logical communication switches to SAFE state.

**Specification Safety related System Structure for SAFETYLON**

Abbreviations

| Abbreviation | Meaning |
|---|---|
|  |  |
| 1oo2 architecture | Hardware architecture with 2 channels |
| β-value | Value of common cause failures |
| λ-value | Value of stochastic failures per hour |
| Consumer | Device which receives data from the network |
| ADC | Analogue to digital converter |
| DC | Diagnostic coverage |
| EMC | Electromagnetic compatibility |
| Fail safe function | Function there no risk can come from the device or the system |
| Fail safe unit | Specific hardware system which is able to reach a safe state |
| Fault | Malfunction of a component or a system |
| Input device | Device which gets data from a peripheral sensor |
| LSB | Least significant bit (byte) |
| MSB | Most significant bit (byte) |
| OSSD | Output Signal Switching Device |
| Output device | Device which transfers its data to an actuator |
| PFD | Probability on low demand |
| PFH | Probability on high demand (continuous mode) |
| Producer | Device which transfers data to the network |

(continued)

| Abbreviation | Meaning |
|---|---|
| Proof test | Complete test of the device (can be done off line) |
| Save state | State there the defined fail safe situation is reached |
| SIL | Safety Integrity Level |
| SFF | Safety Failure Fraction |
| Stack at failure | Device has a malfunction and puts the output to a constant voltage |

Via SAFETYLON a lot of safety related devices communicate together in order to fulfil a safety related application. In accordance to the international standard IEC 61508, not only the used devices but also the system architecture and all phases of the lifecycle are intended to meet the requirements for safety.

Device architecture

Safety related devices have to fit to certain safety standard, which is described in IEC 61508. From this standard a device accords to a SIL-Level (SIL 1 to SIL 3), which is needed by the specific application.
The following table shows the correspondence between the requirements of SIL and the hardware structure of the system or the used device.

| SFF: Safety Failure Fraction | Hardware Failure | | |
|---|---|---|---|
| | 0 | 1 | 2 |
| < 60 % | Not allowed | SIL 1 | SIL 2 |
| 60 % - ≤ 90 % | SIL 1 | SIL 2 | SIL 3 |
| 90 % - ≤ 99 | SIL 2 | SIL 3 | SIL 4 |
| ≥ 99 % | SIL 3 | SIL 4 | SIL 4 |

The structure of SAFETYLON is intended to fulfil SIL 3. As it can be seen by the above table, SIL 3 can be achieved by the use of a "Hardware Failure Tolerance" of 1 and a "Safety Failure Fraction" of at least 90%. Hardware failure tolerance of 1 means that the structure uses 2 channels in order to reach a safe state. For all systems, which have no internal tests, the probability of a component failure leading to a dangerous situation is 50%. 50% of all failures are dangerous and 50% are safe. In order to increase the SFF-value, the whole system is tested during operation in order to detect malfunctions.

**Architecture of "simple" safety related devices**

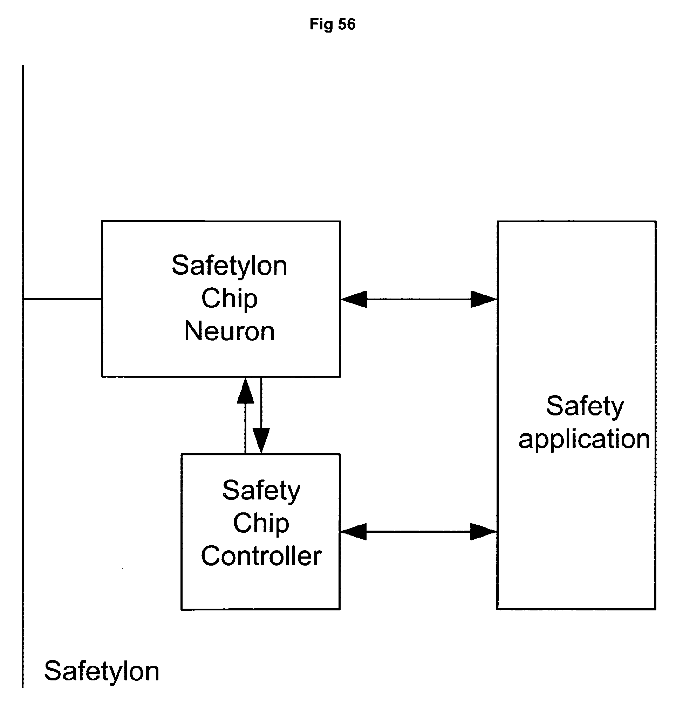

The minimum architecture, which fulfils the requirement of SIL 3, is a 2 channel architecture. The first channel is represented by a standard LON-Chip (e.g. Neuron). The second channel can be built up with a controller. Fig. 56 illustrates such as structure. As it can be seen by Fig. 56, both channels are connected to the external application. In addition to this, there is a communication line between both controllers. There is no need to connect each controller to the SAFETYLON network individually, because both controllers produce and receive their subframes from the whole frame structure.
For building up a low-cost system, which operates on a simple application without any time-critical operation this structure can be used. Typical applications could be:

Temperature sensors
Gas sensors
Smoke detection units

Architecture of high end safety related devices

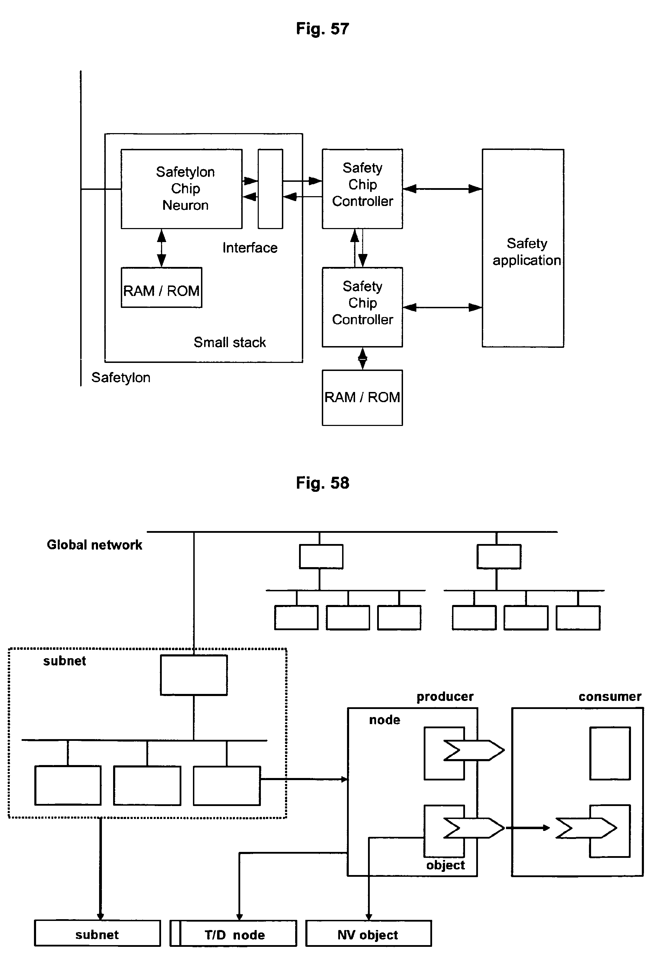

For applications, which need a lot of performance of safety related operation, a suitable structure, which is, e.g., able to operate on high speed and has, e.g., the advantage to have a better diagnostic coverage is show in Fig. 57. Fig. 57 shows a structure where a SAFETYLON chip (e.g. Neuron chip) is used in "Short Stack Application". The safety application may be done by the use of 2 external micro-controllers. These micro-controllers can be identical. No hardware diversity is necessary. Thus, the SAFETYLON chip (e.g. Neuron chip) is used to transfer data over the SAFETYLON network. The safety application and the test procedures are executed by both external controllers, which are connected via an internal network and also connected to the application.

Transfer of safety related data

The SAFETYLON network performs the operation of a lot of devices. The devices can handle safety related and standard messages. Addressing within a safety domain can be seen from Fig. 58.

**Data Format for Transfer**

For generation of a safety related frame, both controllers generate their part of the total frame, which is called subframe. Each subframe includes identical data and is checked by a CRC.

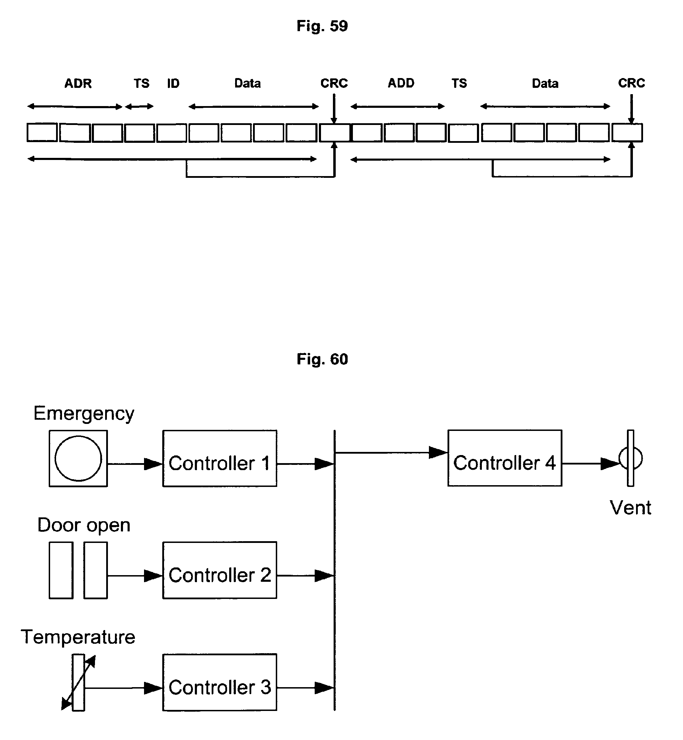

Fig. 59 illustrates a preferred message format.

Communication between several devices

Within a SAFETYLON application no supervisory controller or PLC is needed. So each device is responsible for its application. Fig. 60 shows a typical safety related application implementing operation with 4 devices. The function is as follows:

If the temperature is too high, the vent has to be started. If a person opens the door to the cabin of the vent or if anybody pushes the emergency push button the vent has to stop.

This application has 3 input variables:

E: Emergency push button is pushed
D: Door is open
T: Maximum temperature is reached

There is one output necessary:

V: Vent (dangerous movement)

So the application can be described by a simple equation :

$$V: = T \text{ and } (not (E) \text{ and } not (D))$$

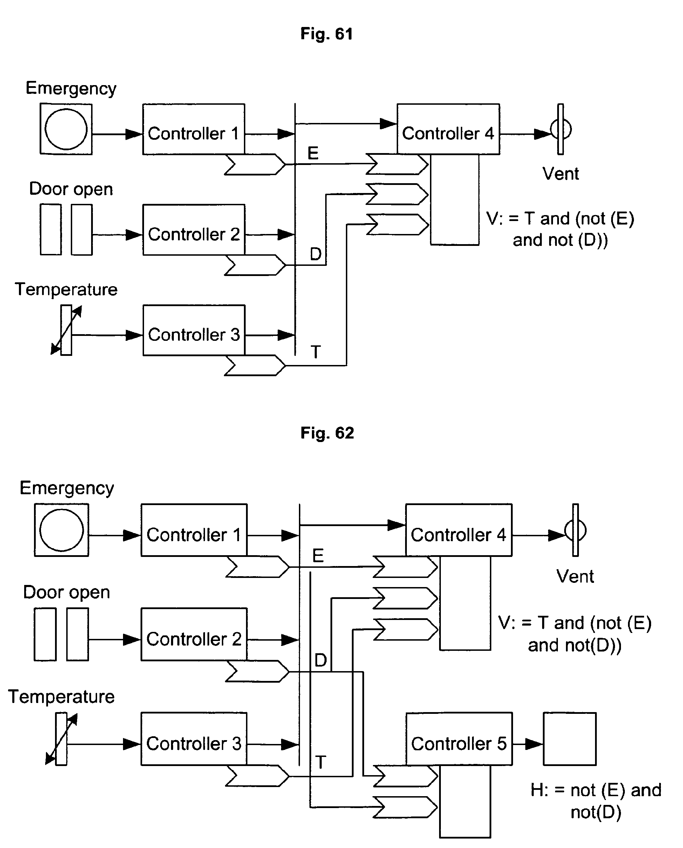

The principle of operation is shown in Fig. 61: Each input device works as a producer and sends its information onto the SAFETYLON network. The output device (vent) fetches all values in order to calculate the right value for the operation of the vent. Within a realistic application a lot of devices can use different values in order to fit to their specific programmed application.
In Fig. 62, an additional output device (controller 5) is added. This device controls a high voltage supply for a lightening unit. If the door will be opened or anybody pushes the emergency push button, the voltage has to be switched off immediately. The controller 5 needs also some values from the input devices. In opposite to controller 4, controller 5 does not need the value from the controller 3, which measures the temperature.

Timing

Each output device (consumer) has to calculate its output function. In addition to this the output device has to check, whether the information from the connected input devices (producers) is actual. So the time stamp and the time interval from any message of the connected producers have to be checked.
For example the vent-output-device has the following table:

| Producer | Maximum interval | Elapsed time | Time stamp |
|---|---|---|---|
| | | | |
| E | 100 msec | 25 msec | 23444 |
| D | 500 msec | 120 msec | 1234 |
| T | 10 sec | 500 mec | 7623 |

If a producer is unable to transfer its data within the "Maximum interval" the producer has to reach a "Safe state". This safe state can cause a switch off of the output device. The following table shows this situation, if the producer 1 (E) doesn't transfer its data within 100 msec.

| Producer | Maximum interval | Elapsed time | Time stamp |
|---|---|---|---|
| | | | |
| E | 100 msec | 100 msec | 23444 |
| D | 500 msec | 10 msec | 1518 |
| T | 10 sec | 500 mec | 7623 |

Transfer of values over the SAFETYLON network

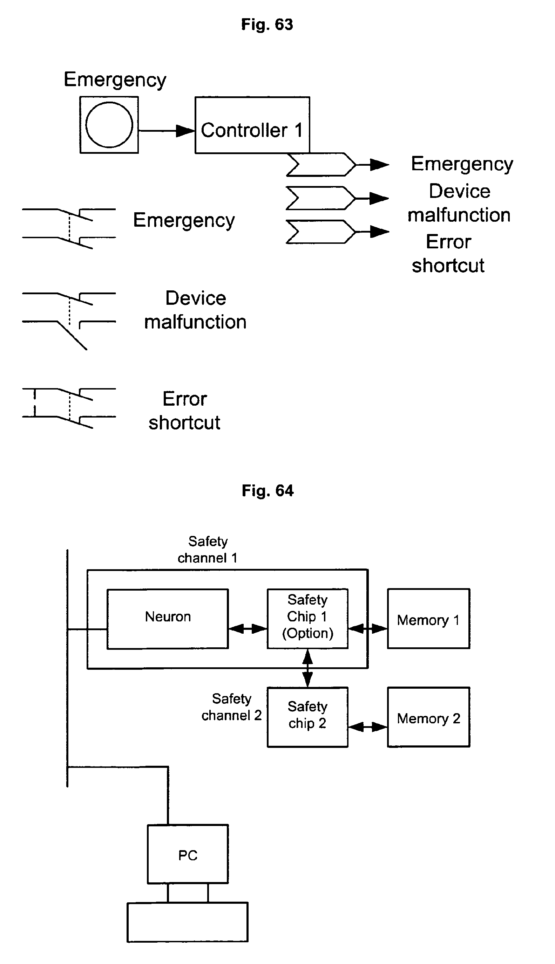

In order to keep the compatibility of safety related transfers to the standard, a lot of new SNVT have to be defined. For real application safety devices offer a lot of different SNVTs. An example is illustrated in Fig. 63: A simple input device for connecting an emergency push button has a lot of SNVTs:
These SNVTs can be:

SNVT_SME_EMG_DATA
SNVT_SME_EMG_MALF
SNVT_SME_EMG_ERROR

The following table shows values for these SNVTs:

| | SNVT_SAFE_EMG_ DATA | SNVT_SAFE_EMG_ MALF | SNVT_SAFE_EMG_ ERROR |
|---|---|---|---|
| Device in order, not pushed | 1 | 1 | 1 |
| Device in order, pushed | 0 | 1 | 1 |
| Malfunction detected | 0 | 0 | 1 |
| Shortcut detected | 0 | 1 | 0 |

As it can be seen from the table, if a malfunction or an error appears, the data output always reaches the safe state. So any error will cause a "switch off function" for the connected consumer.
Also the other values are safety related. Because, if there is a malfunction or a shortcut, the device will not fulfil the requirements of SIL 3. In this case the device has to be changed by a person or (if there is no activity from a person) the whole system has to reach a safe state within the next hour (example).
The real output of the emergency push button has only interest for safety related consumers, which need this function within a short time (see Fig. 61: No. 4 and 5). The error condition or the malfunction has to be transferred to an alarming device, and for this application the cycle time can be very long (10 to 100 seconds). Also the producer has to keep a table, which describes the sequence of transmission. This table could be like follows:

| SNVT | Repetition rate | Last time stamp |
|------|-----------------|-----------------|
|  |  |  |
| SNVT_SAFE_EMG_DATA | 33 msec | 4711 |
| SNVT_SAFE_EMG_MALF | 100 sec | 6592 |
| SNVT_SAFE_EMG_ERROR | 100 sec | 6588 |

In order to keep the system available, the transfer rate of the producer should be a factor of 3 higher than the expected reception rate from the consumer (e.g. 33 msec transfer and 100 msec cycle time on the consumer side).

Life Cycle

From the standard IEC 61508 a safety related system has not only to react safe during operation. All other phases like programming, test, change, maintenance, etc. have to be safe.

Fig. 64 shows a safety related architecture of a SAFETYLON device with a programming tool (PC). As already described, a 2-channel structure is necessary. One channel can be built with a Neuron-chip or with a micro-controller (in this case, the Neuron is only used for data communication via SAFETYLON).

Programming

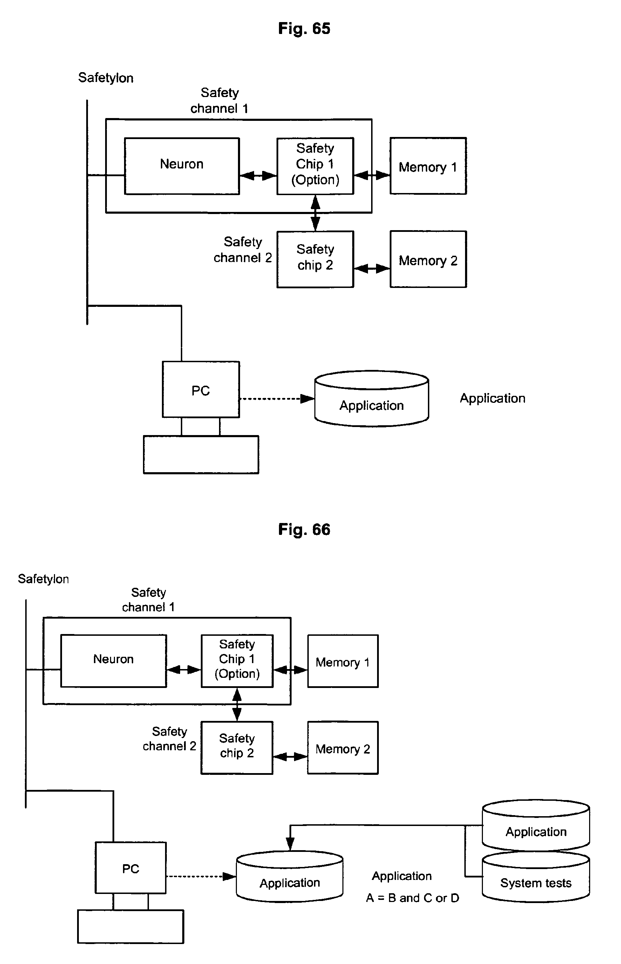

In order to program a safety function the operator uses the PC and writes down his specific functions by the use of an editor. This is illustrated in Fig. 65. After finishing this program, an application file is produced. In addition to this, a system file is attached, which contains all routines for internal tests, communication between the controllers, timers, etc.

As from Fig. 66 can be seen, the real application consists of the application itself and a system file. Both files are connected together.

Binding

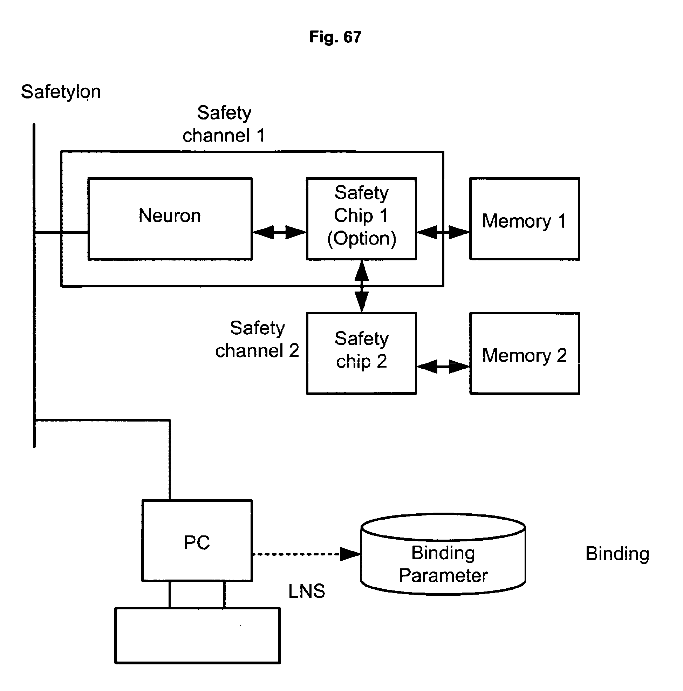

During the next step, the addressing is done. An operator may use LNS in order to build up a binding table. An example for this aspect is illustrated in Fig. 67.

Addressing, Identification and "Safety Data File"

A final step production of the safety data file is to identify the device for down-loading. This device has an ID (e.g. a Neuron ID NID) and a "Safety Address".

For example, following data files are connected together:

Application
Binding information
Chip address (e.g. NID)
Safety Address

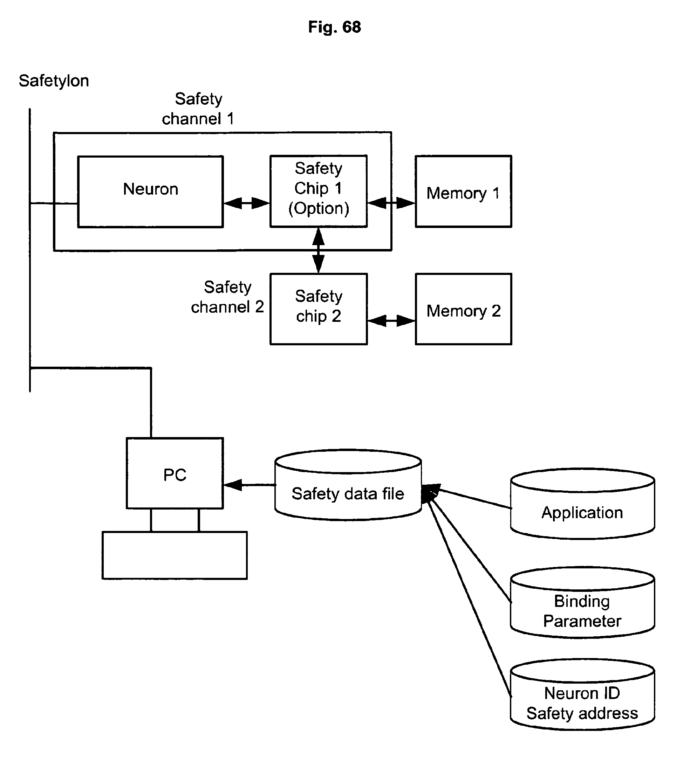

The "Safety Data" file contains all 3 data files (Fig. 68).

Transfer and Verify

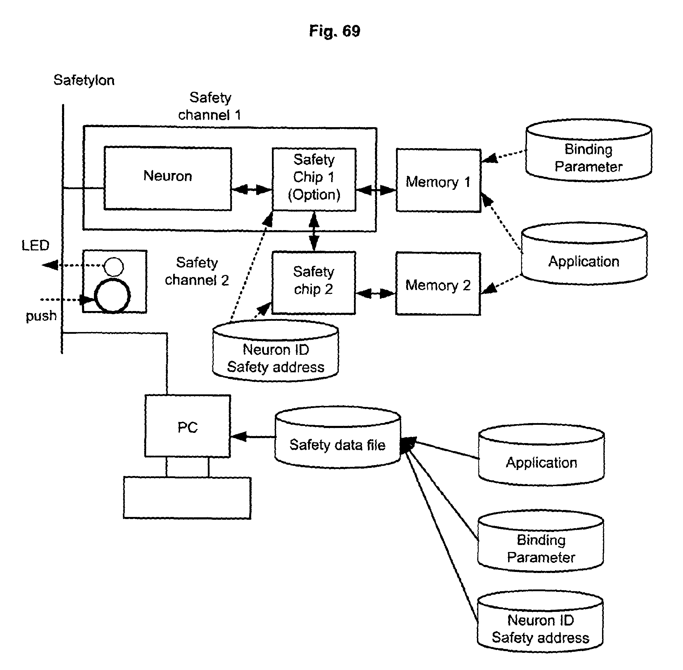

In order to test the application and to be sure about the right device, the whole safety data file is transferred into the specific device as ,e.g., illustrated in Fig. 69: The chip ID (e.g. Neuron ID) is transferred into the device. If the chip ID fits with the chip ID from the transfer file, a LED is flashing at the front of the device. The operator now can identify the device and agrees of the right device and the safety location by pushing the push button. By accepting this, the device stores the safety address into both memory areas (both channels).

The binding parameters are stored into the memory area of the (e.g. Neuron) chip.
The application (with the internal operating system) is stored in both memory areas. Both controllers will get their own program. Each data file (application, binding, address) has its own CRC. During the storage operation the data is checked and the CRC is verified. So any failure from download or from the storage function will be detected.

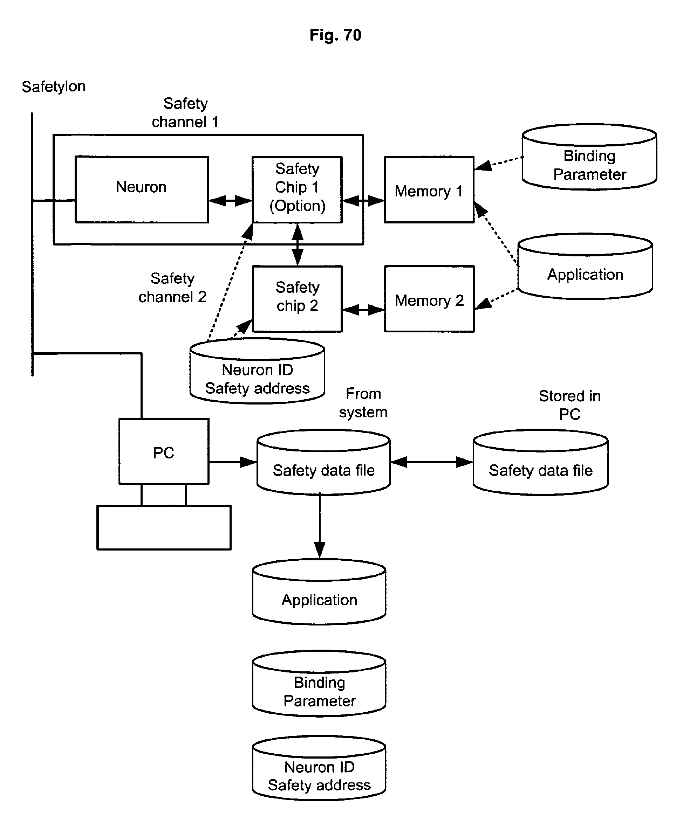

In order to get a valid document file, all data files will be transferred at least to the programming tool (PC). There a comparison will be done from the system file (device) and the stored file from the PC. If the verify function will show no differences, a document file is produced (Fig. 70). Even if this transfer has any undetected failures (because the PC isn't safety related) the stored file from the device is always correct, because this will be checked by the CRC from both controllers.

Test and Operation

Files, which are stored into the device are produced by a non safety related tool. Only the Neuron address is verified by pushing the push button after the operator has identified the flashing LED. During the next step, the following programmed functions may be tested:

Safety address: This can be done by starting the application and finding out the connected devices and the operations.
Safety program: This can be done by testing all functions. Here not only the operations but also the timing has to be checked.

If the operator agrees to all addresses and to all safety functions, he again has to press the push button (either for a longer time or another push button) in order to tell the device that everything is o.k. If for the next time power is connected to the device or the PC issues a "Start Function" to the device, the "Run Mode" will be enabled. If the operator does not agree to the enabling the function (and does not push the button), the device remains in "Test Mode".
The difference between Test Mode and operation (Run Mode) is the following: During test mode the device never starts its operation. In order to test the function a PC has to be connected and the test function has to be initiated. In "Run Mode" the device immediately starts operating after power up.

Device Change

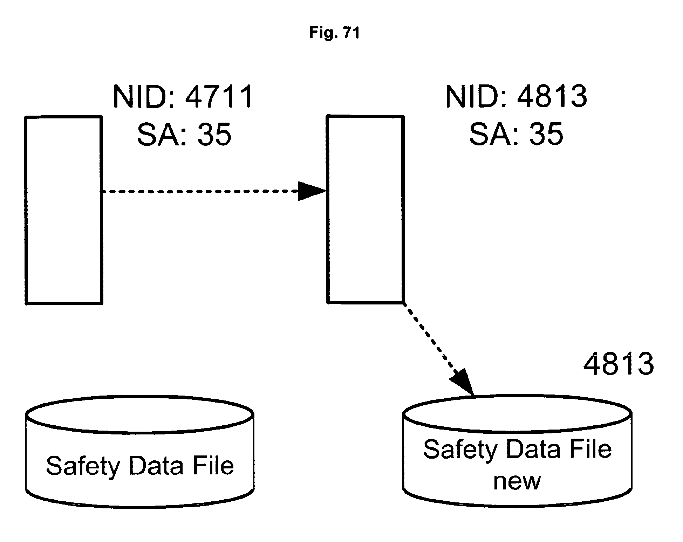

If a device has a fault, a new device can replace the old one. Fig. 71 gives an overview how this may work.

**Safety related and replicated Protocol Services**

Abbreviations

| Abbreviation | Meaning |
|---|---|
| | |
| Consumer | Hardware I/O part or logically based part of a SLN which receives data from the network |
| CRC | Cyclic Redundancy Check |
| DSF | Device system file |
| EIA709 | EIA 709 and EIA 852 |
| Fault | Malfunction of a component or a system |
| HEDA | High end safety related device architecture |
| Input device | Device which gets data from a peripheral sensor |
| NID | Unique device identification (NEURON ID / EIA709 ID) |
| NMS | Network management software |
| Output device | Device which transfers its data to an actuator |
| PRM | Pre-run mode |
| PRDADR | SAFETYLON Address information of a producer |
| Producer | Hardware I/O part or logically based part of a SLN which transfers data to the network |
| RM | Run mode |

(continued)

| Abbreviation | Meaning |
|---|---|
| SADR | SAFETYLON Address |
| Safe state | State at which the defined fail safe situation is reached |
| SDA | Simple safety related Device Architecture |
| SIL | Safety Integrity Level |
| SLN | SAFETYLON Node |
| SLNADR | SAFETYLON Address information of a SLN |
| SLTS | SAFETYLON Time Server |
| TM | Test mode |
| TREQ | Time Synchronization Request |
| TRES | Time Synchronization Response |

ISO/OSI Model, safety related and replicated Services

The SAFETYLON protocol is a completely defined network protocol based on the OSI reference model (ISO 7498). This protocol is embedded into the EIA709 protocol (EN14908), which is also defined according to the OSI reference model. Comparing both OSI reference models and the specific safety related services for each layer the SAFETYLON protocol replicates these services of the EIA709 protocol. In the following the layers, services, safety functionality and references to the details are described.

Comparison of the OSI Reference Models

The below table shows safety related and replicated services of the EIA709 protocol within the SAFETYLON protocol.

Layer 1 - Physical Layer

As the SAFETYLON protocol is an embedded protocol the physical layer may be considered as being not relevant. Moreover, a physical layer in general does not contain any services.

Layer 2 - Link Layer

The link layer of the EIA709 protocol has services for framing, data coding, CRC error testing, collision detection and priority handling. The SAFETYLON protocol is replicating the framing and CRC error testing for safety reasons.

Framing

The framing is implemented by the header byte (start) and the CRC (end) according to the frame format described above. As there is a redundant transmission of the SAFETYLON frames the framing is replicated redundantly. This combination of framing and redundancy ensures the safe recognition of the frames according to the IEC 61508 standard.

CRC error testing

Each redundant frame of the SAFETYLON protocol has its own CRC calculation Therefore, this service of the EIA709 protocol is replicated in a deversitive and redundant way. This principle is fundamentally safety related to reach the low error probability according to the IEC 61508 standard.

Layer 3 - Network Layer

The network layer of the EIA709 protocol is responsible for addressing and routing. The SAFETYLON protocol is replicating the addressing for safety reasons.

Addressing

The addressing service is replicated by the SAFETYLON protocol in a redundant way as described above for safety reasons. Even the addressing scheme of the EIA709 protocol of subnet and node addressing is implemented and consequentially replicated.

Layer 4 - Transport Layer

In the EIA709 protocol the acknowledged, unacknowledged, unicast, multicast, authentication and repetition detection services are implemented. Out of these the SAFETYLON protocol is replicating the unicast, multicast and repetition services for safety reasons.

Unicast

The unicast service is replicated by the SAFETYLON protocol in different ways. When using normal data transmission the transmitted source address is verified by the receiver to get a safe unicast data transmission as described above. Within the time synchronization process the source and destination addresses are transmitted to achieve a safe unicast transmission of time data as described above.

Multicast

The multicast service is replicated by the SAFETYLON protocol by transmission of the source address and setting this source address as a sender expectation of multiple receivers within a safe network management process.

Repetition Detection

While the EIA709 protocol is using a so-called 'transaction Id' (consecutive number) to detect repeated messages the repetition of messages is detected and so replicated by the time stamp implemented in the SAFETYLON protocol. This replicated service is fundamental for the safe data transmission within the network according to the IEC 61508 standard.

Layer 5 - Session Layer

The EIA709 protocol implements the request/response service and the network management services. Within the SAFETYLON protocol the request/response service is replicated. The network management services are replicated within the SAFETYLON network management process.

Request/Response

The SAFETYLON protocol replicates the request/response service in a safe way for the safe time synchronization process as described in detail in [9] chapter 4.1.

Network Management

As described above, several network management services are replicated within the SAFETYLON concept in order to achieve a safe installation and maintenance procedure.

Layer 6 - Presentation Layer

The presentation layer takes care of the data interpretation. Within the EIA709 protocol network variables, explicit messages and foreign formats are supported. The SAFETYLON protocol replicates the use of network variables, explicit messages and foreign formats within the safe and redundantly transmitted data byte fields.

Network Variables

Network variables as defined within the EIA709 protocol can be transmitted within the data structure of the SAFETYLON protocol. The data interpretation is made safe by the replication of this service within the SAFETYLON protocol as described above.

Explicit Messages

Explicit messages or any kind of data can be transmitted by the replication of this service in a safe way as described above.

Foreign Formats

Even new, user-defined data formats can be transmitted in a safe way by this replicated service within the SAFETYLON protocol as described above.

Layer 7 - Application Layer

The application layer is responsible for ensuring the interoperability and compatibility of different applications in the network. For this reason in the EIA709 protocol a set of network variable types have been standardized (see for example LonMark® Interoperability Guidelines). The SAFETYLON protocol replicates this data typing service for safety reasons.

Standard Network Variable Types

It is preferred for the safety of the network applications within a SAFETYLON network that this interoperability and compatibility is ensured by the replication of this service.

The new device has a new Neuron ID. If the old (defect) device is replaced by a new one (Neuron address: 4813) the old safety data file has to be loaded into the new device. Because the safety related device checks the stored Neuron address, the device will not agree to the new address. So a LED will show this failure. Now the operator can again push the push button and agree to a device change.

In this case, the device does the following function:

Check whether all device information from the safety data file will fit to the device (e.g. number of inputs, application, firmware version, serial number).
If the check is o.k. the device will create a new safety data file with a new Neuron ID and the same safety address. So a new CRC is also created.
This new safety data file will be transferred to the PC and stored as a new document file.
In industry, safe methods and techniques play a very important role. It is therefore evident that in the field of machine controls a number of electronic safety systems have been developed, which were approved and certified by the German Technical Inspection Service (Technischer Überwachungsverein or TÜV). In contrast, SAFETYLON concentrates on process control and process automation. SAFETYLON enables and facilitates the safe collection, processing and visualization of fault and alarm data in power plants, refineries and other process industries. In case of error or malfunction the fundamental requirements of IEC 61508 are satisfied since the controls will lock the system in a safe state. In addition, SAFETYLON supports the concept of a safe scenario by which several subsystems will each be transferred into a safe state, either event driven or in a predefined time sequence. The physical network may, of course, be implemented by one or several media such as TCP/IP, Twisted Pair and Power Line. Production plants can also be equipped with SAFETYLON, whereby process and building automation can be merged and integrated. An example is a fire protection application in a manufacturing plant.
Fire has always been a sudden and unpredictable event feared by man. In case of fire the fire fighters and rescue parties give their very best and are typically very well equipped to act fast and efficiently. But also the technical systems in a building are a challenge in this case. The market today provides safe fire protection and alarming systems in accordance with IEC 61508. But these are, as a rule, totally separated from the other building automation systems. This situation shall now be changed with SAFETYLON: safe and non-safe subsystems are able to communicate via the same network in an event oriented fashion such that a fire arising from anywhere in the building will be detected with a "probability reaching absolute certainty". And immediately all, really all subsystems can react to the extraordinary event in the most flexible way: alarm system, escape path illumination, elevators, smoke exhaust ventilation, and even the locking and unlocking of doors.

**Exemplary Applications**

Emergency Lighting

A safe central monitoring system of emergency lighting is designed to consist of a large number of nodes and may comprise two types of nodes, each self powered emergency lamp is one node and a central control unit is another node. It could be replaced by a computer with a special built-in program. This device is designed for remote testing of emergency lamps, the acquisition of test results and report generation.

All system elements in a building or on a site will be individually addressed, which allows for reliable lamp identification. The central control unit communicates with lamps and sends out a command to start testing. After completing the tests, the lamps send back an answer, which includes test results (e.g. the lamp status). Further, the central control unit performs the acquisition and archiving of test results, and subsequently generate the required reports for ensure service personnel and the authorities. Additionally it will be possible to switch the lamps on/off remotely provided that the system is operating in maintenance mode. The emergency lighting application may use FTT channel based communication.

Monitoring and control of emergency lights can be used in conjunction with alarm systems for signaling malfunctions or e.g. together with escape route management systems to signal the escape route by switching the emergency lights in a safe way; an exemplary embodiment of an escape route management and system is described further below.

Test and monitoring of the battery packs may required to detect any malfunction in power supply in order to ensure a precaution in case of any non-safe situation associated with power breakdown.

Elevator Control

The system architecture of the Elevator Control includes of a minimum of two nodes with bidirectional data exchange. The elevator control node receives a safe command and takes the appropriate action according to these commands. The position feedback selection will be based on redundant sensors. The nodes may be based on FTT communication, but may also use Powerline communication.

Elevator control may exchange data between a fix control station and a mobile unit in the cabin. An important function is the safe emergency stop (active and passive).

Active emergency stop means that the cabin door is not closed, so the elevator is not supposed to move. Passive emergency stop means that communication between the fix control station and cabin is lost.

Fire Damper Actuator, Safety Door and Escape Path Manager

The system architecture of the Escape path manager includes, inter alia, sensors and actuators for doors, lamps, fire and smoke detectors as well as fire damper actuators and the like. Field application nodes may control safe states of *automatic doors* and *fire/smoke damper actuators,* which may command and control a safe opened or a safe closed position of a controlled device. This application may use both Ethernet IP-852 and FTT channel based communication.

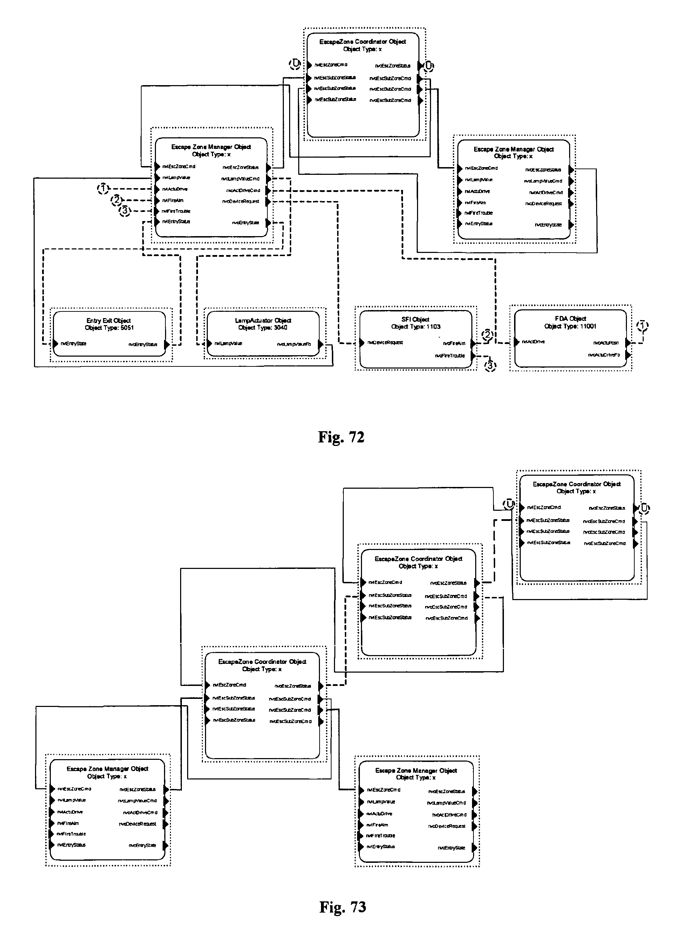

Such an implementation may implement SAFETYLON applications into customer's solutions like fire/smoke damper actuators and automatic doors. An exemplary system architecture is illustrated in Fig. 72 .

An escape path may include several cascaded escape zone coordinators partitioning the management interface to zone controller level. A manager node may communicate through FTT or IP-852.1 channel.

An escape zone manager may coordinate a single escape zone and talk to different sensors and actuators in that zone. The zone manager may be the only and single interface to field function application devices.

Field application nodes control safe states of, e.g., automatic doors and fire/smoke damper actuators. The application nodes may both command and/or control a safe opened or a safe closed position of a controlled device. Same hardware may be used for both functionalities. For a door control, the safety functionality may work in parallel with the standard hardware overriding the standard functionalities, interfaces and the like. For a fire/smoke damper actuator, the safety device may be the only hardware controlling the actuator.

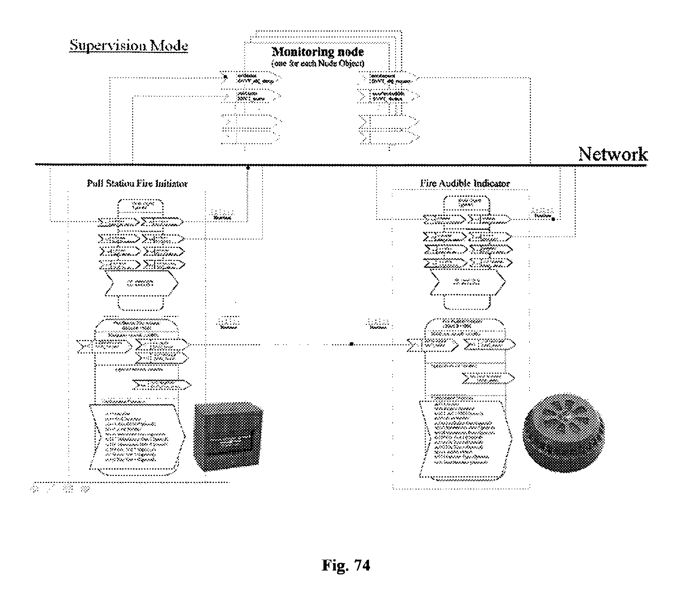

Manager nodes may coordinate zones and put them into either safe escape path mode or non-safe escape path mode. Two levels of managers are contemplated, a zone manager controlling application devices and a zone coordinator. An exemplary embodiment for a zone coordinator is illustrated in Fig. 73.

The zone coordinator allows the user to generate hierarchies of zones and subzones. Depending on the configuration, several Escape Zone managers and Escape Zone coordinators can reside in the same hardware or be distributed over several modules.

Fire detection and intrusion protection

This embodiment implements applications concerning fire detection and alarm systems. An exemplary system is illustrated in Fig. 74.

A pull station fire initiator will generate alarm after switching an input button. It will also generate fault messages reporting a malfunction. A smoke fire initiator will generate an alarm after detection of fire. It will also generate fault messages reporting a malfunction. A fire audible indicator will generate a sound alarm signal after receiving a fire alarm message. It will also generate fault messages responding to malfunctions.

This application may use FTT channel based communication and be integrated into the above escape path manager.

Emergency Exit Button

The system architecture of this application may include, inter alia, sensors and actuators. A normal way of handling emergency exits is to connect switches to the lock so when it is locked a major function in an area will not work. For example the light in the shop or the locks at the main entrance can be controlled. This means if nobody unlocks the emergency locks neither the light nor the entrance door will work. This is an effective way of forcing devices into a safe state. Another way is to have the emergency exits always locked but with a lock lever on the inside which mechanically opens the lock when turned. This is a poor solution, however, with regard to intrusion and theft security.

An exit button controls the state of the lock. Normally the lock is locked with no mechanical lever override. The reason for this is to increase the security level with respect to intrusion and theft, especially when the area is unoccupied and equipped with intrusion alarm control.

When somebody needs to pass the door where the lock is mounted you need to press the exit button. This will open the lock with priority and - if necessary - initiate an alarm. If there is a malfunction the lock will go into its safe state, i.e. open.

Access control

The system architecture may include, inter alia, sensors, actuators and external devices (like card reader, keyboard, and push button) for protected gates. An access control node is a safe control node for access control and may for example guarantee the state "open" in case of fire or other catastrophe; blocking the access to non-authorized people; make available a list of people inside, e.g., a building in case of emergency; and prevent opening of special fire doors to people, who are not firemen. This application may use FTT channel based communication.

An access control node may manage different card reader, e.g., magnetic or proximity that can be used to implement an access procedure based on user's identification. An access control node may include three on/off inputs to sense door status (open or closed) and/or to read commands from a pushbutton to unlock a gate. It may also include outputs that can be used to drive, e.g., electric locks, automatic doors or gates, and/or local alarm device.

**Claims**

1.  Method for communications in a network, wherein
    communications are carried out such that a safe state and/or a safe scenario is obtained.

2.  Method according to claim 1, wherein
    communications are carried out such that a safe cascading state and/or a safe cascading scenario is obtained.

3.  Method according to claim 1 or 2, wherein

    - a communications layer protocol is used, and
    - at least one service of a lower layer is replicated in a higher layer in the case of safe communications.

4.  Method according to claim 3, wherein, as the at least one service, addressing of a device to which communications are to be established is replicated.

5.  Method according to claim 3 or 4, wherein

    - the communications layer protocol implements an ISO/OSI model having seven layers, and
    - the at least one service of a lower layer is replicated in an application layer of the ISO/OSI model.

6. Method according to of one of the claims 3 to 5, wherein the at least one service replicated in the higher layer includes at least one of services related to

- standard network variables,
- at least one network variables, explicit messages and foreign formats,
- request and/or response,
- at least one of unicast transfer, multicast transfer and repetition detection,
- addressing, and
- at least one framing and CRC.

7. Method according to of one of the preceding claims, wherein at least two devices being in communications with the network are group-wise addressed in case of safe communications, preferably by binding the at least two devices.

8. Method according to one of the preceding claims, wherein the at least two devices being in communications with the network and/or at least further two devices being in communications with the network are group-wise addressed in case of non-safe communications.

9. Method according to one of the preceding claims, wherein commissioning of a device of the network is carried out by implementing safe commissioning information, wherein the safe commissioning information is preferably stored at least partially in a device to be commissioned.

10. Method according to claim 9, wherein commissioning of a device of the network includes at least one of identification with addressing,
transferring an application, preferably including at least one respective verification step,
transferring binding parameters, preferably including at least one respective verification step, and
transferring application parameters, preferably including at least one respective verification step.

11. Method according to one of the preceding claims, wherein addressing of a device of the network includes associating a non-safe device ID and a safe device ID.

12. Method according to one of the preceding claims, wherein binding of a first device of the network and at least one second device of the network includes associating a safe ID of the at least one second device to a safe ID of the first device.

13. Method according to claim 12, wherein the network comprises devices being adapted to use communication channels for communications there between, which devices being preferably EIA 709.1 devices, and wherein at least one of the communications channels of at least two devices with associated safe IDs are used for safe communication by transmitting safe messages between said at least two devices with associated safe IDs.

14. Communications network being adapted to carry out a method as defined in at least one of the claims 1 to 13.

15. Communications network according to claim 14, comprising means being adapted to carry out communications such that a safe state and/or a safe scenario is obtained.

16. Communications network according to claim 15, comprising means being adapted to carry out communications such that a safe cascading state and/or a safe cascading scenario is obtained.

17. Communications network according to of one of the claims 14 to 16, comprising

- a communications layer protocol, and
- means being adapted to replicate at least one service of a lower layer in a higher layer in the case of safe communications.

18. Communications network according to claim 17, wherein the means being adapted to replicate at least one service is adapted to replicate an addressing service of a device to which communications are to be established.

19. Communications network according to claim 17 or 18, wherein

- the communications layer protocol implements an ISO/OSI model having seven layers, and
- the means being adapted to replicate at least one service is adapted to replicate the at least one service of a lower layer in an application layer of the ISO/OSI model.

20. Communications network according to of one of the claims 17 to 19, wherein the means being adapted to replicate at least one service is adapted to replicate at least one of services related to

- standard network variables,
- at least one network variables, explicit messages and foreign formats,
- request and/or response,
- at least one of unicast transfer, multicast transfer and repetition detection,
- addressing, and
- at least one framing and CRC.

21. Communications network according to of one of preceding claims 14 to 20, comprising means being adapted to address at least two devices being in communications with the network in group-wise manner in case of safe communications, preferably by binding the at least two devices.

22. Communications network according to of one of the claims 14 to 21, the means being adapted to address at least two devices in group-wise manner is adapted to address the at least two devices being in communications with the network and/or at least further two devices being in communications with the network are group-wise addressed in case of non-safe communications.

23. Communications network according to of one of the claims 14 to 22, comprising means being adapted to carry out commissioning of a device of the network by implementing safe commissioning information, wherein the safe commissioning information is preferably implemented at least partially in a device to be commissioned.

24. Communications network according to claim 23, wherein the means being adapted to carry out commissioning is adapted to carry out commissioning by including at least one of
identification with addressing,
transferring an application, preferably including at least one respective verification step,
transferring binding parameters, preferably including at least one respective verification step, and
transferring application parameters, preferably including at least one respective verification step.

25. Communications network according to of one of claims 14 to 24, comprising means being adapted to address a device of the network by associating a non-safe device ID and a safe device ID.

26. Communications network according to of one of the claims 14 to 25, comprising means being adapted to bind a first device of the network and at least one second device of the network by associating a safe ID of the at least one second device to a safe ID of the first device.

27. Communications network according to claim 26, comprising devices being adapted to use communication channels for communications there between, which devices being preferably EIA 709.1 devices, and wherein at least two devices with associated safe IDs are adapted to use at least one of their communications channels for safe communication by transmitting safe messages between each other.

28. Communications network according to of one of the claims 14 to 26, comprising at least one of a non-safe EIA 709 network and a SAFETYLON network.

29. Device for a communications network, which device being adapted to carry out a method as defined in at least one of the claims 1 to 13.

30. Device according to claim 29, being a sensor, an actuator or a controller.

31. Device according to claim 29 or 30, being a SAFETYLON device.

32. Computer program product comprising software portions, which - when executed on a computer - carry out a method as defined in at least one of the claims 1 to 13.

**33.** Computer program product according to claim 32 being stored on a computer readable storage medium or in a computer readable storage device.

Fig. 1

EP 1 850 554 A2

**Fig. 2**

## Fig. 3

# Hardware:
# CPU Modul

Fig. 4

| PROTOTYPE AREA | 4x DIGIN | 2x DIGOUT |
|---|---|---|
| | DEBUG / DISCONNECT | |
| | CONNECTOR X2 | Console |
| | | JTAG1, 2, 3 |
| | MODULE | RESET |
| | CONNECTOR X1 | Power Supply S1 |
| X3 POWERLINE | | |
| RS-485 | | Power Supply S2 |
| FTT-10A/FTX1 | 100BaseT | 2x Power Input |

Fig. 5

## Fig. 6

SAFETYLON OEM Application

SAFETYLON Layer

Common Interface API

ORION Client API

ShortStack Client API

Serial Driver

SAFETYLON Firmware

Fig. 7

EP 1 850 554 A2

**NL220 LonWorks(c) Manager - DEMO**

Project  Edit  Clipboard  Tree  Tree display  Views  Tools  Plugins  Lang  Help

All subsystems

LonMark Object <Digital in 1>

Actions | Configuration | Plugins

- Project
  - LonWorks(tm) servers
  - Locations
    - NL4EO (NL4EO Newron System)
      - NL4EO NS
      - Digital in 1
      - Digital in 2
        - nvoTOR02 (Digital input 2)
      - Digital in 3
      - Digital in 4
      - Equations
      - Non interoperable variables
    - NL4SR (NL4SR Newron System)
      - NL4SR NS
      - Digital out 1
        - nviTOR0
      - Digital out 2
      - Digital out 3
      - Digital out 4
      - Analog out
      - Threeshold
      - Non interopera

Node           NL4EO
Name           Digital in 1
Type           Open loop sensor
Principal nv   nvoTOR01            Details

Close
Help

Request

Normal
Disable
Update status
Self test
Update alarm
Report supported actions
Override

☐ Continuously update status

| ☑ Comm failure | ☑ Locked out |
| ☑ Disabled | ☑ Manual control |
| ☑ Electrical fault | ☑ Mechanical fault |
| ☑ Fail self test | ☑ Open Circuit |
| ☑ Feedback failure | ☑ Out of limits |
| ☑ In alarm | ☑ Out of service |
| ☑ In override | ☑ Over range |
| ☑ Invalid id | ☑ Unable to measure |
| ☑ Invalid request | ☑ Self test in progress |

Status        Self test        Report

Poll
Details ...
Rename
Add to browser
Remove from browser
Variable's connection ...
Copy network variable's value in memory      Ctrl+C
Paste network variable's value from memory    Ctrl+V
Plugins                                        ▶
Help on network variables
Refresh tree

Edit or create the connection of the variable.

NUM   N.S.  Admin.-Advanced  04/10/01  17:17

**Fig. 8**

**Prior Art**

**SAFETYLON**

Fig. 9

EP 1 850 554 A2

**Fig. 10**

Safetylon network

producer — input device

consumer — output device

producer and consumer — combination of input and output device

**Fig. 11**

Safetylon network

Channel 1

Internal communication

Channel 2

Fail safe unit

Safety related output

## Fig. 12-1

## Fig. 12-2

$$\lambda_s = \lambda_{SD} + \lambda_{SU}$$

$$\lambda_{ges} = \lambda_s + \lambda_D$$

$$\lambda_D = \lambda_{DD} + \lambda_{DU}$$

**Dangerous faults (detected)**

$$\lambda_D = \lambda_{DD} + \lambda_{DU}$$

**Dangerous faults (undetected)**

**Faults safe**

**Dangerous faults**

S: faults unsafe

D: faults safe

$\lambda_{DD}$: dangerous detected

$\lambda_{DU}$: dangerous undetected

**Safety detected faults (without danger)**

**All faults**

**Safety undetected faults (without danger)**

$$\lambda_s = \lambda_{SD} + \lambda_{SU}$$

**Fig. 13**

## Fig. 14

Dangerous fault

OR

System A

System B

AND

Failure in A undetected

Failure in B undetected

common-cause (undetected)

Fault in A between test interval

Fault in B between test interval

common-cause (between test interval)

A: DU
B: DU

A: DD
B: DD

β: common-cause

Both channels have failures at the same time without a common cause reason

## Fig. 15

**Dangerous faults**

**Residual error probability**

$$P(t) = P_1(t) \cdot P_2(t) + P_{DU}(t) + P_{DD}(t)$$

8

**Total probability for failures in both channels at the same interval** $P = P_1 * P_2 * .. * P_n$

8

$P_{DU}(t)$: β, not detectable

$P_{DD}(t)$: β, not detectable

**Common cause failure (not detectable or undetected)**

$P_1(t)$: A Error 1

**Notice:**

$P_2(t)$: B Error 2

$$P_{ges} = \prod_1^n P_n = P_1 \cdot P_2 \cdot \ldots P_n$$

**Fig. 16**

**Fig. 17**

**Fig. 18**

**Fig. 19**

**Fig. 20**

Intelligent external
device

Safetylon device

Input filter

24 Volt output
with short test
pulses (different
phases)

**Fig. 21**

**Fig. 22**

| Hd | Adr | Byte1 | Byte2 | Time | CRC1 |

⟹ μC1 → application

| B1A | Byte2 | CRC2 |

⟹ μC2

receiver (reduction
of layers)

| Hd | Adr | Byte1 | Byte2 | Time | CRC1 | B1A | Byte2 | CRC2 |

**Fig. 23**

Controller 1
Output 1
Read back
R1
Transformer

Serial
communication

Controller 2
Output 2
Read back
R2

T1 T2 U out

**Fig. 24**

**Fig. 25**

**Fig. 26**

**Fig. 27**

| ID | Address: 3 Bytes | Time stamp MSWord | Data: n Bytes | CRC1 |
|----|------------------|-------------------|---------------|------|

| ID | Subnet | T/D node | NV Obj | TSMB1 | TSMB2 | Data 1 | Data 2..n-1 | Data n | CRC1 | CRC1(W) |
|----|--------|----------|--------|-------|-------|--------|-------------|--------|------|---------|

opt.      opt.

| T | Node |
|---|------|

| Time Stamp 16 Bit MSWord |
|---|

| MSByte | LSByte |
|--------|--------|

| CRC8 |
|------|

| CRC16 |
|-------|

MSB           LSB

| 0 | Format | Version | Data Length |
|---|--------|---------|-------------|

| 0 | FM1 | FM2 | V1 | V2 | DL1 | DL2 | DL3 |
|---|-----|-----|----|----|-----|-----|-----|

**Fig. 28**

| ID | Address: 3 Bytes | Time stamp MSWord | Data: n Bytes | CRC1 | ID | Address: 3 Bytes | Time stamp LSWord | Data: n Bytes | CRC2 |
|----|------------------|-------------------|---------------|------|----|------------------|-------------------|---------------|------|

**Fig. 29**

**Fig. 30**

Fig. 31

producer consumer

Node

Object

TS (MSWord)          TS (LSWord)

Producer       Consumer

Message A

Retrigger (A)

Message B

Max. Delay

Message C

Retrigger (B)

Message D
lost

Retrigger (C)

Message (T)

overrun

**Fig. 32**

**Fig. 33**

| | | | | | Data bit 0 to bit n | | | | | CRC |

Data area  CRC area

Sub frame

**Fig. 34**

producer    consumer  ADD: 58

ADD: 137                TADR: 137

TADR: 58                CTN: 5

CTN: 5                  t: valid

Sync erfolgreich

$t > t_{max}$

Sync nicht
erfolgreich

producer        consumer

Node

Object

137             58

**Fig. 35**

producer    consumer  ADD: 58

TADR: 137

CTN: 5

$t > t_{max}$

ADD: 58

TADR: 137

CTN: 6

CTN response: 5

producer        consumer

Node

Object

137             58

**Fig. 36**

**Fig. 37**

**Fig. 38**

Safety channel 1

| EIA709 Chip | ↔ | Safety Chip 1 | ↔ | Memory 1 |

Safety channel 2

| Safety Chip 2 | ↔ | Memory 2 |

PC

**Fig. 39**

SADR

| Byte 2 | Byte 1 | Byte 0 |

Time/Data Service

**Fig. 40**

**Fig. 41**

## Fig. 42

## Fig. 43

## Fig. 44

Safety channel 1

EIA709 Chip ⟷ Safety Chip 1 (Option) ⟷ Memory 1

Safety channel 2 — Safety Chip 2 ⟷ Memory 2

PC

NID and SADR

## Fig. 45

Safety channel 1

EIA709-Chip ⟷ Safety Chip 1 (Option) ⟷ Memory 1

Safety channel 2 — Safety Chip 2 ⟷ Memory 2

PC

Safety related Parameters

Ordinary Parameters

## Fig. 46

**Fig. 47**

Safety-related
Parameters

Binding Parameters

Application

NID and SADR

Safety
channel 1

EIA709 Chip

Safety Chip 1
(Option)

Memory 1

Safety
channel 2

Safety Chip 2

Memory 2

PC

Device System File from Device

Device System File stored in PC

Safety-related
Parameters

Binding Parameters

Application

NID and SADR

Safety-related
Parameters

Binding Parameters

Application

NID and SADR

Document File

**Fig. 48**

Sensor 1
(Producer)

Sensor 2
(Producer)

Logic
Controller
(Producer/
Consumer)

Actuator 1
(Consumer)

Actuator 2
(Consumer)

**Fig. 49**

**Fig. 50**

old device
NID: 01:02:03:04:05:06
SADR: 00:01:01

new device
NID: 06:05:04:03:02:01
SADR: 00:01:01

PC

Device System File from **old** Device

LED

push

Device System File from **new** Device

Device System File stored in PC

=

Safety-related
Parameters

Binding Parameters

Application

NID and SADR

Safety-related
Parameters

Binding Parameters

Application

NID and SADR

Document File

EP 1 850 554 A2

**Fig. 51**

**Fig. 52**

83

Idle state

Waiting for second message part

Idle state

Update event

Safe message part from SC2

Update event

Build first safe message part

Check address, data of message parts

Build second safe message part

Store safe message part in temporary buffer

Concatenate message parts

Safe message part to SC2

Waiting for second message part

Send complete safe message

Idle state

Safety Chip 1

Idle state

Safety Chip 2

**Fig. 53**

Receive message

Complete safe message

Safety Chip 1

Receive message and send acknowledgement

Acknowledgement

Send acknowlegement

Safety Chip 2

Acknowledgement

Update application data table

Update application data table

**Fig. 54**

**Fig. 55**

**Fig 56**

```
Safetylon
Chip        ⟷        Safety
Neuron               application

Safety
Chip        ⟷
Controller
```

Safetylon

**Fig. 57**

**Fig. 58**

**Fig. 59**

| ADR | | | TS | ID | Data | | | | CRC | ADD | | TS | Data | | | | CRC |
|---|---|---|---|---|---|---|---|---|---|---|---|---|---|---|---|---|---|

**Fig. 60**

Emergency

Controller 1

Controller 4

Vent

Door open

Controller 2

Temperature

Controller 3

**Fig. 61**

Emergency

Controller 1

E

Door open

Controller 2

D

Temperature

Controller 3

T

Controller 4

Vent

V: = T and (not (E) and not (D))

**Fig. 62**

Emergency

Controller 1

E

Door open

Controller 2

D

Temperature

Controller 3

T

Controller 4

Vent

V: = T and (not (E) and not(D))

Controller 5

H: = not (E) and not(D)

**Fig. 63**

Emergency

Controller 1

Emergency

Device malfunction

Error shortcut

Emergency

Device malfunction

Error shortcut

**Fig. 64**

Safety channel 1

Neuron

Safety Chip 1 (Option)

Memory 1

Safety channel 2

Safety chip 2

Memory 2

PC

## Fig. 65

## Fig. 66

**Fig. 67**

Safetylon

Safety
channel 1

Neuron ←→ Safety
Chip 1
(Option) ←→ Memory 1

Safety
channel 2

Safety
chip 2 ←→ Memory 2

PC

LNS

Binding
Parameter

Binding

**Fig. 68**

**Fig. 69**

## Fig. 70

Safetyon

**Fig. 71**

NID: 4711
SA: 35

NID: 4813
SA: 35

4813

Safety Data File

Safety Data File
new

**Fig. 72**

**Fig. 73**

**Fig. 74**